(19) Europäisches Patentamt
European Patent Office
Office européen des brevets

(11) **EP 2 110 939 A1**

(12) **EUROPÄISCHE PATENTANMELDUNG**

(43) Veröffentlichungstag:
**21.10.2009 Patentblatt 2009/43**

(51) Int Cl.:
***H02M 7/487*** *(2007.01)*

(21) Anmeldenummer: 08154781.2

(22) Anmeldetag: **18.04.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **ABB Research LTD**
**8050 Zurich (CH)**

(72) Erfinder: **Häderli, Christoph**
**8047 Zürich (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

Bemerkungen:
Geänderte Patentansprüche gemäss Regel 137(2) EPÜ.

(54)    **Wechselrichter und Verfahren zum Steuern eines Wechselrichters mit fliegenden Kapazitäten**

(57)    Mehrphasiger Wechselrichter (1) zum Bereitstellen von Phasenspannungen an mehreren Phasenausgängen (PVa,PVb,PVc), umfassend mindestens drei Spannungseingänge ($E_1$,$E_0$,$E_2$) und mehrere, jeweils einem Phasenausgang (PVa,PVb,PVc), zugeordnete Schalteranordnungen ($2_a$,$2_b$,$2_c$), die jeweils eine fliegende Kapazität (5) enthalten. Ein Phasenausgang (PVa, PVb,PVc) mehr als zwei Ausgangsspannungsniveaus bereitstellen kann. Die Strompfade in einer Schalteranordnung ($2_a$,$2_b$,$2_c$) werden gemäß Schaltzuständen ausgewählt, um Ober eine Zeitperiode einer Modulation mehrere Schaltzustände zu kombinieren, so dass eine Phasenspannung an einem Phasenausgang (PVa,PVb, PVc) durch zeitliche Kombination von mehreren verschiedenen Ausgangsspannungsniveaus während einer oder mehreren Zeitperioden bereitgestellt wird, und um eine durchschnittliche Kondensatorspannung über der fliegenden Kapazität (5) gemäß Vorgabe einzustellen. Weiterhin werden die Strompfade in der jeweiligen Schalteranordnung ($2_a$,$2_b$,$2_c$) so ausgewählt, dass die entsprechende Phasenspannung durch Kombination von mindestens zwei Schaltzuständen in der mindestens einen Schalteranordnung ($2_a$,$2_b$,$2_c$). mit unterschiedlichen, nicht zueinander benachbarten Ausgangsspannungsniveaus während der einen oder den mehreren Zeitperioden generiert wird, um einen gewünschten durchschnittlichen Strom aus mindestens einem der Spannungseingänge ($E_1$,$E_0$,$E_2$) einzustellen.

Fig. 1

EP 2 110 939 A1

**Beschreibung**

**Technisches Gebiet**

Die Erfindung betrifft einen mehrphasigen Wechselrichter zum Bereitstellen von Ausgangsspannungen an mehreren Phasenausgängen, die durch Schalten von Schaltern von Schalteranordnungen aus Gleichspannungspotenzialen einen zeitlichen Verlauf von Ausgangsspannungen bereitstellen, um eine gewünschte Phasenausgangsspannung zu erzeugen.

**Stand der Technik**

Wechselrichter dienen im Allgemeinen zur Umwandlung von Gleichspannung bzw. Gleichstrom in Wechselspannung bzw. Wechselstrom. Verwendung finden Wechselrichter dort, wo ein elektrischer Verbraucher, wie z.B. ein Elektromotor, eine geregelte Wechselspannung zum Betrieb benötigt. Die Gleichspannung kann von einem Gleichrichter zur Verfügung gestellt werden oder von Gleichspannungsquellen, wie z.B. Batterien, Brennstoffzellen, Solarzellen und dgl.

Bei Wechselrichtern werden Eingangsspannungspotenziale über geeignete Schalteranordnungen (Wechselrichterstufen) an einen Ausgang bzw. bei mehrphasigen Wechselrichtern an mehrere Phasenausgänge angelegt, wobei die Strompfade in der/den Schalteranordnung(en) in zeitlicher Abfolge nacheinander so ausgewählt werden, dass an dem Ausgang bzw. an den Phasenausgängen des Wechselrichters zeitlich variierende Spannungen, d.h. Wechselspannungen, ausgegeben werden.

Um die Anzahl der auszugebenden Spannungsniveaus gegenüber der Anzahl der Eingangsspannungspotenziale zu erhöhen, können die Wechselrichterstufen zumindest teilweise mit einer oder mehreren fliegenden Kapazitäten versehen sein, die so betrieben werden, dass sie als eine Spannungsquelle dienen. Mithilfe der Kondensatorspannung über der fliegenden Kapazität kann die jeweilige Phasenausgangsspannung auch mit Hilfe von Spannungspotenzialen, die von den Eingangsspannungspotenzialen verschieden sind, erzeugt werden.

Um die Spannung über der fliegenden Kapazität konstant zu halten, wird die Schalteranordnung pulsdauermoduliert wechselweise so angesteuert, dass sich der Stromfluss durch die fliegende Kapazität im Wechsel umkehrt, so dass die Kondensatorspannung über der fliegenden Kapazität um einen bestimmten vorgegebenen Spannungswert in geringem Maße schwankt. Die Schwankungsbreite der Kondensatorspannung über der fliegenden Kapazität richtet sich nach dem Profil des am Ausgang des Wechselrichters abgegriffenen Stroms und der Periodendauer der Umschaltzyklen des Kondensatorstroms durch die fliegende Kapazität, sowie dem Kapazitätswert des Kondensators. Alternativ kann die Kondensatorspannung auch gemäß einer Vorgabe variabel eingestellt werden.

Die Eingangsspannungspotenziale können durch zwei oder mehr als zwei Spannungsquellen, wie z.B. Batterien, gebildet werden, die in Reihe verschaltet sind, so dass drei oder mehrere Eingangsspannungspotenziale abgreifbar sind. Die zwischen dem maximalen und minimalen Potenzial abgreifbaren Potenziale werden Zwischenpunktspannungen bzw. Zwischenpunktpotenziale genannt.

Alternativ können bei Vorliegen nur einer Spannungsquelle (z.B. Gleichrichter, Batterie, Solarmodul, Brennstoffzelle usw.) virtuelle Spannungsquellen durch Verwendung von in Reihe geschalteten Kondensatoren gebildet werden, die zwischen die Anschlüsse der Versorgungsspannungsquelle geschaltet sind und zwischen denen Zwischenpunktspannungen abgreifbar sind.

Bei Belasten des Wechselrichters mit einem Verbraucher wird den einzelnen Eingangsspannungspotenzialen ein Strom entzogen, der zu einer entsprechenden Belastung der Spannungsquellen führt. Bei Vorliegen eines von mehreren Spannungsquellen bzw. den mehreren virtuellen Spannungsquellen abhängigen Zwischenpunktes ist es jedoch sinnvoll, den in oder aus dem Zwischenpunkt fließenden Strom zu begrenzen, bzw. auf Null zu reduzieren, um eine möglichst gleichbleibende Belastung der einzelnen in Reihe geschalteten Spannungsquellen bzw. der in Reihe geschalteten Kondensatoren zu erreichen.

Im Falle des Bildens des Zwischenpunktes mithilfe der in Reihe geschalteten Kondensatoren (Zwischenkreiskondensatoren) ist ein durchschnittlicher Stromfluss am Zwischenpunkt von Null wichtig, da ansonsten eine Variation der Spannung am Zwischenpunkt auftreten kann, was für den Betrieb der Schaltungsanordnung unerwünscht ist. Beispielsweise kann eine sich ändernde Zwischenpunktspannung dazu führen, dass bei Verwendung von IGBTs als Schalter in der/den Schalteranordnung(en) eine zulässige Blockierspannung überschritten wird und somit die Funktion der Schalteranordnung beeinträchtigt. Weiterhin führt eine veränderte Zwischenpunktspannung zu veränderten Ausgangsspannungsniveaus und damit zu veränderten Ausgangsspannungen.

Bei bestehenden Lösungen zur Steuerung eines mehrstufigen Wechselrichters mit einer fliegenden Kapazität ist es oftmals schwierig, die Schaltzustände der der jeweiligen Phase zugeordneten Schalteranordnungen so zu wählen, dass einerseits die Spannung über der fliegenden Kapazität konstant auf dem gewünschten Wert gehalten wird (bzw. gemäß einer Vorgabe eingestellt wird) und andererseits ein durchschnittlicher Strom aus einem Zwischenpunkt auf einen vorgegebenen Wert bzw. gemäß einem vorbestimmten Stromprofil eingestellt wird. Bei Wechselrichtern mit redundanten Strompfaden kann die gleiche Ausgangsspannung durch Schalten von verschiedenen Strompfaden durch die Wechselrichterstufen erreicht werden. In der Regel führen nacheinander geschaltete Strompfade durch die Schalteranordnung der mehreren Wechselrichterstufen, bei denen die Stromrichtung durch die fliegende Kapazität umgekehrt wird und die die gleiche Ausgangsspannung an den Ausgang der Schalteranordnung anlegen, zu Stromflüssen aus einer oder mehrerer der Spannungseingänge einschließlich einem Zwischenpunkt.

Insbesondere bei mehrphasigen Wechselrichtern ist es in der Regel schwierig, bei einem vorgegebenen Gegentaktvektor geeignete Kombinationen von Schaltzuständen in den mehreren Schalteranordnungen (für gleiche Ausgangsspannungsniveaus an den jeweiligen Phasenausgängen) zu finden, die zu dem gewünschten durchschnittlichen Strom aus den jeweiligen Spannungseingängen, insbesondere aus dem Zwischenpunkt, führen. Bei Verwendung von drei Spannungseingängen mit einem Zwischenpunkteingang, an dem ein mittleres Spannungspotenzial zur Verfügung gestellt wird, ist es z.B. häufig notwendig, den durchschnittlichen Strom an dem Zwischenpunkt auf Null zu halten. Abhängig von dem gewählten Gegentaktvektor sind die Freiheitsgrade bei der Wahl der möglichen Strompfade, d.h. der möglichen Schaltzustände der jeweiligen Schalteranordnungen, zum Bereitstellen eines bestimmten Ausgangsspannungsniveaus begrenzt und unter Umständen kann die Vorgabe eines gewünschten durchschnittlichen Stromes an dem Zwischenpunkt nicht erreicht werden. Je nach verwendeten Spannungsquellen kann dies zu einer einseitigen, unerwünschten Belastung der Spannungsquellen bzw. zu einem Verschieben des Zwischenpunktpotenzials führen.

Bei mehrphasigen Wechselrichtern mit einer fliegenden Kapazität können am jeweiligen Phasenausgang Phasenspannungen ausgegeben werden, die sich aus einer Kombination von zwei oder mehr als zwei Ausgangsspannungen gemäß einer geeigneten Modulation ergeben. Beispielsweise ist bei einem Wechselrichter mit drei Eingangsspannungspotenzialen und einer fliegenden Kapazität die Bereitstellung von fünf Ausgangsspannungen möglich. Eine gewünschte Phasenspannung zwischen dem höchsten und dem niedrigsten Eingangsspannungspotenzial wird in der Regel mithilfe einer Modulation generiert, bei der zwei durch den Wechselrichter generierbare, einander benachbarte Ausgangsspannungen an den Phasenausgang angelegt werden, so dass sich je nach Tastverhältnis der Modulation eine Phasenspannung zwischen den entsprechenden Ausgangsspannungen einstellt. Mögliche Modulationen sind die Pulsweitenmodulation und die Raumzeigermodulation.

## Darstellung der Erfindung

Es ist Aufgabe der vorliegenden Erfindung, einen mehrphasigen Wechselrichter und ein Verfahren zum Betreiben eines mehrphasigen Wechselrichters zur Verfügung zu stellen, wobei mehr Freiheitsgrade bei der Auswahl der Strompfade in den Schalteranordnungen bereitgestellt werden, um die Kondensatorspannung über der fliegenden Kapazität einzustellen und einen durchschnittlichen Strom aus mindestens einem Zwischenpunkt einzustellen und insbesondere eine Möglichkeit zur Verfügung zu stellen, den durchschnittlichen Strom an dem mindestens einen Zwischenpunkt auf Null zu reduzieren.

Diese Aufgabe wird durch den mehrphasigen Wechselrichter gemäß Anspruch 1 sowie durch das Verfahren zum Betreiben eines Wechselrichters gemäß dem nebengeordneten Anspruch gelöst.

Weitere vorteilhafte Ausgestaltungen der Erfindung sind in den abhängigen Ansprüchen angegeben.

Gemäß einem Aspekt ist ein mehrphasiger Wechselrichter zum Bereitstellen von Phasenspannungen an mehreren Phasenausgängen vorgesehen. Der Wechselrichter umfasst:

- mindestens drei Spannungseingänge zum Empfangen von drei verschiedenen Eingangsspannungspotentialen;
- mehrere, jeweils einem Phasenausgang zugeordnete Schalteranordnungen, wobei in mindestens einer der Schalteranordnungen Strompfade von den Spannungseingängen zu einem der jeweiligen Schalteranordnung zugeordneten Phasenausgang schaltbar sind, um dort mehr als zwei Ausgangsspannungsniveaus bereitzustellen, wobei mindestens ein Teil der Strompfade über eine fliegende Kapazität in der Schalteranordnung verläuft;
- eine Steuereinheit, die ausgebildet ist, um die Strompfade in der mindestens einen Schalteranordnung gemäß Schaltzuständen auszuwählen,
- um über eine Zeitperiode einer Modulation mehrere Schaltzustände zu kombinieren, so dass eine Phasenspannung an einem Phasenausgang durch zeitliche Kombination von mehreren verschiedenen Ausgangsspannungsniveaus während einer oder mehreren Zeitperioden bereitgestellt wird, und
- um eine durchschnittliche Kondensatorspannung über der fliegenden Kapazität einzustellen, d.h. entweder konstant zu halten oder gemäß einer gewünschten Referenz bzw. Vorgabe zu variieren.

Die Steuereinheit ist ausgebildet, um die Strompfade in der mindestens einen Schalteranordnungen auszuwählen, so dass die entsprechende Phasenspannung durch Kombination von mindestens zwei Schaltzuständen mit unterschiedlichen, nicht zueinander benachbarten Ausgangsspannungsniveaus während der einen oder den mehreren Zeitperioden generiert werden, um einen gewünschten durchschnittlichen Strom aus mindestens einem der Spannungseingänge einzustellen.

Der obige mehrphasige Wechselrichter ermöglicht es, Phasenspannungen gemäß einem vorbestimmten Gegentaktvektor bzw. einem vorbestimmten Gegentaktvektorraum auszugeben und dabei in verbesserter Weise, d.h. mit erhöhtem Freiheitsgrad, Schaltzustände während einer Zeitperiode zu kombinieren, mit denen zum einen in der mindestens einen Schalteranordnung mit der fliegenden Kapazität diese auf einer einzustellenden Spannung zu halten und gleichzeitig den gesamten Strom an dem Zwischenspannungseingang auf einen gewünschten durchschnittlichen Strom bzw. auf ein gewünschtes Profil einzustellen. Dies wird dadurch erreicht, dass eine Kombination von Schaltzuständen während einer oder mehrerer der Zeitperioden zugelassen wird, die zu Gleichtaktsprüngen aller Phasenausgänge führen können. Dabei wird der Gleichtaktsprung in den einzelnen Phasen durch Kombination geeigneter Schaltzustände der Schalteranordnungen realisiert.

Da in einer Ausführungsform der Gleichtaktsprung jede Schalteranordnung jeder Phase betrifft, kann der Gegentaktvektor beibehalten werden. Gleichzeitig stehen für die Auswahl eines möglichen Schaltzustandes der um den Gleichtaktspannungssprung veränderten Ausgangsspannung eine größere Anzahl von möglichen Schaltzuständen zur Verfügung, aus denen ausgewählt werden kann, um die oben genannten Ziele, nämlich das Einstellen der Kondensatorspannung über der fliegenden Kapazität und das Einstellen des durchschnittlichen Stromes an dem Zwischenpunkteingang auf einen gewünschten Strom bzw. auf ein gewünschtes Stromprofil, zu gewährleisten.

Weiterhin kann die Zeitperiode einer Modulationsperiode eines Modulationsverfahrens, insbesondere einer Pulsweitenmodulation oder einer Raumvektormodulation, entsprechen. Alternativ kann die Zeitperiode einer variablen Zeitdauer eines Modulationsverfahrens entsprechen, das keine konstante Modulationsperiode verwendet. Das beinhaltet auch Modulationsverfahren mit Hysterese-Regler oder "switching surface control". Insbesondere kann die Zeitperiode beispielsweise gleich oder kürzer sein als ein Sechstel einer Grundperiode einer der auszugebenden Phasenspannungen.

Gemäß einer Ausführungsform kann die Steuereinheit ausgebildet sein, um die durchschnittlichen Gegentaktspannungen zwischen den Phasenausgängen aller Schalteranordnungen während der Zeitperiode gemäß einem Modulationsverfahren zu variieren, um eine durchschnittliche Gegentaktspannung konstant zu halten.

Gemäß einer Ausführungsform kann die Steuereinheit die Schalteranordnungen ansteuern, um Phasenspannungen zu erzeugen, die zu einer Variation mindestens einer der Gegentaktspannungen um maximal ein Ausgangsspannungsniveau führt.

Weiterhin kann die Steuereinheit ausgebildet sein, um während mehrerer Zeitperioden die durchschnittlichen Gegentaktspannungen konstant zu halten.

Ferner kann die Steuereinheit ausgebildet sein, um die Gegentaktspannungen zwischen den Phasenausgängen während einer Zeitperiode um maximal zwei Ausgangsspannungsniveaus zu variieren.

Weiterhin kann die Steuereinheit ausgebildet sein, um für jede Schalteranordnung die Schaltzustände einer Zeitperiode so auszuwählen, dass sie entweder zu einander entgegen gesetzten Stromrichtungen in der fliegenden Kapazität oder zu keinem Stromfluss in der fliegenden Kapazität führen.

Gemäß einer Ausführungsform kann die Steuereinheit ausgebildet sein, um für jede der Schalteranordnungen die Schaltzustände während der Zeitperiode zu kombinieren, so dass für mindestens einen der Spannungseingänge ein durchschnittlicher Strom oder ein bestimmtes Stromprofil eingestellt wird.

Die Steuereinheit kann ausgebildet sein, um für jede der Schalteranordnungen die Schaltzustände während der Zeitperiode zu kombinieren, so dass für einen der Spannungseingänge, der ein mittleres Eingangsspannungspotential bereitstellt, ein durchschnittlicher Strom von Null eingestellt wird.

Weiterhin kann die Steuereinheit ausgebildet sein, um die Schaltzustände bei der auszugebenden Phasenspannung während der Zeitperiode oder während einer bestimmten Anzahl von Zeitperioden Schaltzustände abhängig von einem einzustellenden durchschnittlichen Strom auszuwählen, die zu einer Strombilanz des mindestens einen Spannungseingangs während der oder der mehreren Zeitperioden mit einem durchschnittlichen Strom als dem einzustellenden durchschnittlichen Strom führen. Diesbezüglich kann die Steuereinheit beim Auswählen der Schaltzustände das Einstellen der durchschnittlichen Kondensatorspannung über der fliegenden Kapazität gegenüber dem Einstellen des durchschnittlichen Stroms des mindestens einen Spannungseingangs priorisieren.

Gemäß einer Ausführungsform kann ein erster, ein zweiter und ein dritter Spannungseingang vorgesehen sein, wobei mindestens eine der Schalteranordnungen eine erste Schaltergruppe aufweist, um entweder den ersten Spannungseingang oder den zweiten Spannungseingang oder keinen der Spannungseingänge mit einem ersten Anschluss der fliegenden Kapazität zu verbinden, wobei die mindestens eine Schalteranordnung eine zweite Schaltergruppe aufweist, um entweder den zweiten Spannungseingang oder den dritten Spannungseingang oder keinen der Spannungseingänge mit einem zweiten Anschluss der fliegenden Kapazität zu verbinden, wobei eine dritte Schaltergruppe vorgesehen ist, um entweder den ersten Anschluss oder den zweiten Anschluss der fliegenden Kapazität mit dem Phasenausgang zu verbinden.

Gemäß einem Aspekt ist ein Verfahren zum Betreiben eines mehrphasigen Wechselrichters zum Bereitstellen von Phasenspannungen an mehreren Phasenausgängen vorgesehen. Der Wechselrichter umfasst mindestens drei Spannungseingänge zum Empfangen von drei verschiedenen Eingangsspannungspotentialen und mehrere, jeweils einem Phasenausgang zugeordnete Schalteranordnungen, wobei in mindestens einer der Schalteranordnungen Strompfade von den Spannungseingängen zu einem der jeweiligen Schalteranordnung zugeordneten Phasenausgang schaltbar sind, um dort mehr als zwei Ausgangsspannungsniveaus bereitzustellen, wobei mindestens ein Teil der Strompfade über eine fliegende Kapazität in der Schalteranordnung verläuft. Das Verfahren sieht vor, dass der Wechselrichter betrieben wird, indem die Strompfade in der mindestens einen Schalteranordnung gemäß Schaltzuständen ausgewählt werden:

- um über eine Zeitperiode einer Modulation mehrere Schaltzustände zu kombinieren, so dass eine Phasenspannung an einem Phasenausgang durch zeitliche Kombination von mehreren verschiedenen Ausgangsspannungsniveaus während einer oder mehreren der Zeitperioden bereitgestellt wird, und
- um eine durchschnittliche Kondensatorspannung über der fliegenden Kapazität konstant zu halten oder gemäß einer Vorgabe einzustellen bzw. zu variieren.

Das Auswählen der Strompfade in der mindestens einen Schalteranordnungen wird durchgeführt, so dass die entsprechende Phasenspannung durch Kombination von mindestens zwei Schaltzuständen mit unterschiedlichen, nicht zueinander benachbarten Ausgangsspannungsniveaus während der einen oder den mehreren Zeitperioden generiert werden, um einen gewünschten durchschnittlichen Strom aus mindestens einem der Spannungseingänge einzustellen.

## Kurze Beschreibung der Zeichnungen

Bevorzugte Ausführungsformen der Erfindung werden nachfolgend anhand der beigefügten Zeichnungen näher erläutert. Es zeigen:

Fig. 1    einen grundlegenden Aufbau eines dreiphasigen Wechselrichters mit fünf Ausgangsspannungsniveaus und drei Spannungseingängen;

Fig. 2    die Veranschaulichung von zwei Strompfaden durch eine Schalteranordnung, die zu entgegen gesetzten Stromrichtungen in der fliegenden Kapazität führen;

Fig. 3    eine Darstellung der Funktion des gemittelten Zwischenpunktstromes über eine Modulationsperiode als Funktion der gemittelten Phasenspannung über eine Modulationsperiode in einer Phase;

Fig. 4    eine grafische Darstellung des gesamten gemittelten Zwischenpunktstromes als Funktion der Gleichtaktspannung in einem Dreiphasensystem;

Fig. 5    eine mögliche Kombination von Strompfaden während einer Modulationsperiode, die verschiedene Stromrichtungen durch die fliegende Kapazität ergeben und die zu einem Zwischenpunktstrom von Null führen;

Fig. 6    eine mögliche Kombination von Strompfaden während einer Modulationsperiode, die verschiedene Stromrichtungen durch die fliegende Kapazität ergeben und die zu einem maximalen Zwischenpunktstrom führen;

Fig. 7    ein $\alpha,\beta$-Diagramm, das den möglichen Vektorraum für ein bestimmtes Ausgangsspannungsniveau in der Phase b veranschaulicht;

Fig. 8    ein $\alpha,\beta$-Diagramm, das mögliche neue Vektoren, die auf der Phase b basieren, veranschaulicht;

Fig. 9    den vollen Bereich von verfügbaren modifizierten und virtuellen Raumzeigern darstellt; und

Fig. 10    Raumvektordreiecke und modifizierte Raumvektoren darstellt.

## Wege zur Ausführung der Erfindung

Bei mehrphasigen Wechselrichtern mit fliegenden Kapazitäten ist die Steuerung von mehreren Größen notwendig. Je nach Art der Stromversorgung müssen der Zwischenpunktstrom aus einem oder mehreren Zwischenpunkteingängen und die Kondensatorspannung der fliegenden Kapazität gesteuert werden.

Die Kondensatorspannung über der jeweiligen fliegenden Kapazität kann durch die Wahl von geeigneten redundanten Schalterzuständen gesteuert werden, bei denen ein Strompfad durch die fliegende Kapazität von einem der Spannungseingänge der Schalteranordnung zu dem Phasenausgang der Schalteranordnung gebildet wird. Das Vorzeichen des Ausgangsstromes und die Abweichung der Kondensatorspannung von der einzustellenden Spannung über die fliegende Kapazität bestimmen den erforderlichen Schalterzustand, der einen Strompfad bestimmt, der einen Strom mit einer bestimmten Stromrichtung über die fliegende Kapazität bewirkt, um die Abweichung der Kondensatorspannung zu reduzieren bzw. zu kompensieren.

Beim Betrieb eines mehrphasigen Wechselrichters mit mehreren Ausgangsspannungsniveaus kann es weiterhin wünschenswert sein, den Zwischenpunktstrom aus einem Zwischenpunkteingang im Durchschnitt auf Null zu reduzieren, was durch die geeignete Wahl von redundanten Schalterzuständen, die verschiedene Strompfade angeben, erreicht werden soll.

Die am jeweiligen Phasenausgang auszugebende Phasenspannung wird in der Regel durch Modulation von zwei einander benachbarten Ausgangsspannungsniveaus gemäß einer Pulsweitenmodulation oder einer Raumzeigermodulation mithilfe der der gewünschten Ausgangsspannung nächstliegenden zwei Eingangsspannungspotenziale erzeugt. Dabei ergibt sich eine Phasenspannung bzw. der Verlauf der Phasenspannung als Kombination von zeitlich aufeinander folgenden Ausgangsspannungen.

Bei einer solchen Herangehensweise kann die Leistungsfähigkeit gegenüber dem, was mit Wechselrichtern mit lediglich drei Ausgangsspannungsniveaus möglich ist, nicht verbessert werden. Bei Wechselrichtern mit drei oder mehr als drei Ausgangsspannungsniveaus, die aus zwei oder mehr als zwei Eingangsspannungspotenzialen unter Nutzung einer fliegenden Kapazität als zusätzliche virtuelle Spannungsquelle erzeugt werden, ergibt sich ein höherer Freiheitsgrad bei der Auswahl von Schalterzuständen zum Erreichen der oben beschriebenen Ziele.

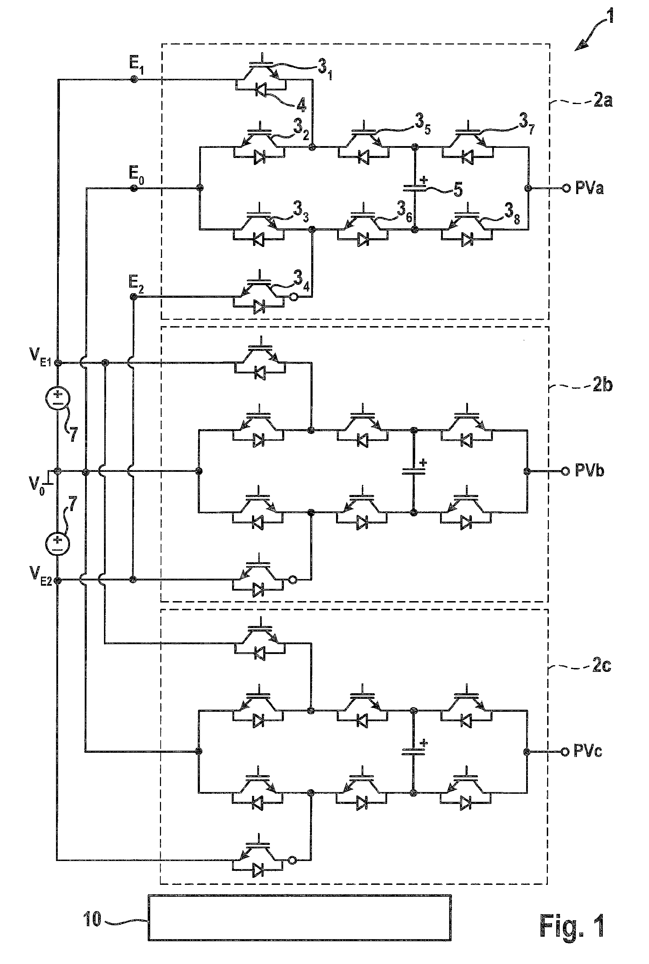

Fig. 1 zeigt als Beispiel einen dreiphasigen wahlweise redundanten 5-Pegel-Wechselrichter oder nicht redundanten 7-Pegel-Wechselrichters, d.h. einen Wechselrichter, bei dem jeder Phasenausgang PVa, PVb, PVc fünf oder sieben diskrete Ausgangsspannungsniveaus ausgeben kann. Durch eine später näher beschriebene Modulation werden aus den Ausgangsspannungsniveaus die gewünschten Phasenspannungen erzeugt.

Der Wechselrichter 1 umfasst drei Schalteranordnungen $2_a$, $2_b$, $2_c$, eine für jeweils einen Phasenausgang PVa, PVb, PVc. Jeder Schalteranordnung $2_a$, $2_b$, $2_c$ werden drei Eingangsspannungspotenziale $V_{E1}$, $V_0$, $V_{E2}$ bereitgestellt. In der beschriebenen Ausführungsform entsprechen die Eingangsspannungspotenziale $V_{E1}$ = $V_{DC}/2$, $V_0$ = 0V (im folgenden Zwischenpunktspannung genannt) und $V_{E2}$ = -$V_{DC}/2$. Die Eingangsspannungspotenziale werden durch zwei in Reihe geschaltete Spannungsquellen 7 mit jeweils einer Versorgungsspannung von $V_{DC}/2$ bereitgestellt. Ein Zwischenpunkt zwischen den beiden Spannungsquellen liefert ein Zwischenpunktpotenzial. Im Prinzip sind jedoch auch Spannungsquellen mit verschiedenen Versorgungsspannungen frei wählbar.

Anstelle der in Fig. 1 gezeigten Ausführungsform mit zwei getrennten Spannungsquellen 7 kann auch eine einzelne Spannungsquelle mit einer Versorgungsspannung von $V_{DC}$ vorgesehen sein. Ein mittleres Eingangsspannungspotenzial als Zwischenpunktpotential kann an einem Zwischenpunkt durch eine zur Spannungsquelle parallel geschaltete Serienschaltung von Zwischenkreiskapazitäten bereitgestellt werden. Der Zwischenpunkt zum Bereitstellen des Zwischenpunktpotenzials wird durch den Knoten zwischen den Zwischenkreiskapazitäten gebildet.

Bei beiden genannten Ausführungen der Spannungsversorgung ist es insbesondere vorteilhaft, den durchschnittlichen Zwischenpunktstrom aus dem Zwischenpunkt auf Null zu halten. Dadurch kann an dem Zwischenpunkt eine Spannung bereitgestellt werden, die exakt der halben Versorgungsspannung der Spannungsquelle entspricht. Fließt ein Zwischenpunktstrom, so verändert sich die durch die Zwischenkreiskapazitäten bereitgestellte Zwischenpunktspannung, was zu einem Überschreiten von zulässigen Spannungen in den Schalteranordnungen $2_a$, $2_b$, $2_c$ führen kann, die in den jeweiligen Schalteranordnungen $2_a$, $2_b$, $2_c$ verwendet werden. Im Falle der Versorgung mit den mehreren Spannungsquellen werden diese bei einem durchschnittlichen Zwischenpunktstrom von ungleich Null in unterschiedlich belastet, was ebenfalls nachteilig ist.

Jede der Schalteranordnungen $2_a$, $2_b$, $2_c$ umfasst eine Reihe von Schaltern $3_1$ bis $3_8$, die beispielsweise in Form von IGBTs ausgebildet sein können, zu denen jeweils eine antiparallele Diode 4 geschaltet ist, um einen Freilaufpfad für negative Ströme zur Verfügung zu stellen.

Im Folgenden wird anhand der ersten Schalteranordnung $2_a$ die Anordnung der Schalter 3 in der Schalteranordnung näher erläutert. Die Schalteranordnung $2_a$ weist einen ersten Spannungseingang $E_1$, einen zweiten Spannungseingang $E_2$ und einen Zwischenpunkteingang $E_0$ auf. Der erste Spannungseingang $E_1$ ist mit der hohen Eingangsspannung $V_{E1}$, der Zwischenpunkteingang $E_0$ mit der Zwischenpunktspannung $V_0$ und der zweite Spannungseingang $E_2$ mit der niedrigen Eingangsspannung $V_{E2}$ verbunden.

Die Schalteranordnung weist acht Schalter $3_1$ bis $3_8$ auf. Ein erster Anschluss eines ersten Schalters $3_1$ ist mit dem ersten Spannungseingang $E_1$, erste Anschlüsse eines zweiten $3_2$ und eines dritten Schalters $3_3$ sind mit dem Zwischenpunkteingang $E_0$ und ein erster Anschluss eines vierten Schalters $3_4$ ist mit dem zweiten Spannungseingang $E_2$ verbunden. Der erste bis vierte Schalter $3_1$ bis $3_4$ bilden eine erste Wechselrichterstufe.

Die zweiten Anschlüsse des ersten und des zweiten Schalters $3_1$, $3_2$ sind mit einem ersten Anschluss eines fünften Schalters $3_5$ verbunden. Die zweiten Anschlüsse des dritten Schalters $3_3$ und des vierten Schalters $3_4$ sind mit einem ersten Anschluss eines sechsten Schalters $3_6$ verbunden. Zwischen den beiden zweiten Anschlüssen des fünften Schalters $3_5$ und des sechsten Schalters $3_6$ ist eine fliegende Kapazität 5 angeschlossen. Erste Anschlüsse eines siebten

Schalters $3_7$ und eines achten Schalters $3_8$ sind ebenfalls mit den zweiten Anschlüssen des fünften Schalters $3_5$ und des sechsten Schalters $3_6$ verbunden. Die zweiten Anschlüsse des siebten Schalters $3_7$ und des achten Schalters $3_8$ sind miteinander verbunden und bilden den Phasenausgang der betreffenden Schalteranordnung $2_a$. Der fünfte bis achte Schalter $3_5$ bis $3_8$ bilden eine zweite Wechselrichterstufe, die seriell mit der ersten Wechselrichterstufe verbunden ist.

Im gezeigten Ausführungsbeispiel sind die Schalteranordnungen $2_a$, $2_b$, $2_c$ identisch ausgebildet. Diese können jedoch auch zur Ausbildung eines asymmetrischen Wechselrichters verschieden, d.h. mit nur einer Stufe oder mehr als zwei Stufen und/oder mit oder ohne fliegende Kapazität 5, ausgebildet sein.

Mithilfe einer derartigen Schalteranordnung $2_a$, $2_b$, $2_c$ und bei einer Kondensatorspannung, die auf ein Viertel der Eingangsspannung $V_{DC}/4 = (V_{E1} - V_{E2})/4$ eingestellt ist, können fünf Ausgangsspannungsniveaus am Phasenausgang PV ausgegeben werden. Alternativ könnte die Kapazität auch ein Drittel der Spannung haben und dann würden 7 Ausgangsspannungsniveaus zur Verfügung stehen. Dann besteht aber keine Redundanz bei der Wahl von Strompfaden durch die Schalteranordnungen $2_a$, $2_b$, $2_c$ und andere Regelkonzepte müssten verwendet werden. Allgemein wird bei den Schalteranordnungen $2_a$, $2_b$, $2_c$ eine Redundanz bei der Wahl von Strompfaden zum Bereitstellen eines Ausgangsspannungsniveaus und mit verschiedenen Stromrichtungen durch die fliegende Kapazität benötigt.

Die Ausgangsspannungsniveaus entsprechen den an den Spannungseingängen liegenden Eingangsspannungspotenzialen $V_{E1}$, $V_0$ und $V_{E2}$ sowie jeweils einem zwischen den Spannungspotenzialen $V_{E1}$ und $V_0$, sowie zwischen $V_0$ und $V_{E2}$ liegenden Potenzialen. Die Ausgangsspannungsniveaus können mithilfe einer Kondensatorspannung der fliegenden Kapazität 5 durch entsprechende Spannungsaddition oder-subtraktion von einem ausgewählten Eingangsspannungspotenzial $V_{E1}$, $V_0$, $V_{E2}$ gebildet werden.

Im dargestellten Beispiel beträgt die Kondensatorspannung über der fliegenden Kapazität 5 vorzugsweise $V_{DC}/4$, so dass die fünf Ausgangsspannungsniveaus $V_{DC}/2$, $V_{DC}/4$, 0, $-V_{DC}/4$, $-V_{DC}/2$ entsprechen. Mithilfe einer Steuereinheit 10 werden die Schalter $3_1$ bis $3_8$ jeder Schalteranordnung $2_a$, $2_b$, $2_c$ so angesteuert, dass sich am jeweiligen Phasenausgang PVa, PVb, PVc eine gewünschte Phasenspannung ergibt. Die Phasenspannung ergibt sich durch eine geeignete Kombination von den der gewünschten Phasenspannung benachbarten Ausgangsspannungsniveaus gemäß einer Modulation, wie z.B. einer Pulsweitenmodulation oder einer Raumzeigermodulation. Nachfolgende Tabelle zeigt die möglichen Kombinationen der Ausgangsspannungsniveaus für das in Fig. 1 gezeigte Beispiel einer Schalteranordnung. Redundante Zustände für ein Ausgangsspannungsniveau sind für $+V_{DC}/4$ und $-V_{DC}/4$ angegeben.

| Teilspannung der ersten Wechselrichterstufe (Schalter $3_1$ bis $3_4$) | Teilspannung der zweiten Wechselrichterstufe (Schalter $3_5$ bis $3_8$) | Ausgangsspannungsniveau |
|---|---|---|
| $V_{DC}/2$ | 0 | $V_{DC}/2$ |
| $V_{DC}/2$<br>0 | $-V_{DC}/4$<br>$+V_{DC}/4$ | $V_{DC}/4$<br>$V_{DC}/4$ |
| 0 | 0 | 0 |
| 0<br>$-V_{DC}/2$ | $-V_{DC}/4$<br>$+V_{DC}/4$ | $-V_{DC}/4$<br>$-V_{DC}/4$ |
| $-V_{DC}/2$ | 0 | $-V_{DC}/2$ |

Um die Kondensatorspannung über der fliegenden Kapazität 5 möglichst auf dem gewünschten Wert, im vorliegenden Fall $U_{DC}/4$, zu halten, werden wechselweise redundante Strompfade durch die Schalter $3_1$ bis $3_8$ der Schalteranordnung gewählt. Die Strompfade werden ausgebildet, indem einige der Schalter $3_1$ bis $3_8$ geschlossen werden, während die übrigen geöffnet sind, so dass zwischen einem der Spannungseingänge $E_1$, $E_2$ und $E_0$ und dem Phasenausgang ein Strom fließen kann. Die Strompfade können je nach Ladung in der fliegenden Kapazität 5 ausgebildet werden. Die Kondensatorspannung wird dazu durch eine geeignete Maßnahme ermittelt, d.h. gemessen oder durch einen Beobachter geschätzt. Ein Laden bzw. Entladen erfolgt dabei entweder bei bereits eingestellter Kondensatorspannung wechselweise durch Auswahl von Strompfaden mit entgegen gesetzten Stromrichtungen durch die fliegende Kapazität oder allgemein abhängig von der jeweiligen Kondensatorspannung der fliegenden Kapazität, d.h. abhängig davon, ob die gewünschte Kondensatorspannung erreicht worden ist. Dies führt bei zeitlich nacheinander veränderten Strompfaden entweder zu einem Ladestrom, einem Entladestrom oder keinem Stromfluss durch die fliegende Kapazität, so dass sich bei einem am Phasenausgang abgerufenen Laststrom eine kleine Variation der Kondensatorspannung um den vorgegeben (eingestellten) Wert der Kondensatorspannung den vorbestimmten Spannungswert von $U_{DC}/4$ ergibt. Die Variation hängt von dem Profil des am Phasenausgang abgegriffenen Stroms, einer Periodendauer der Umschaltzyklen des Kondensatorstroms durch die fliegende Kapazität, sowie dem Kapazitätswert des Kondensators ab.

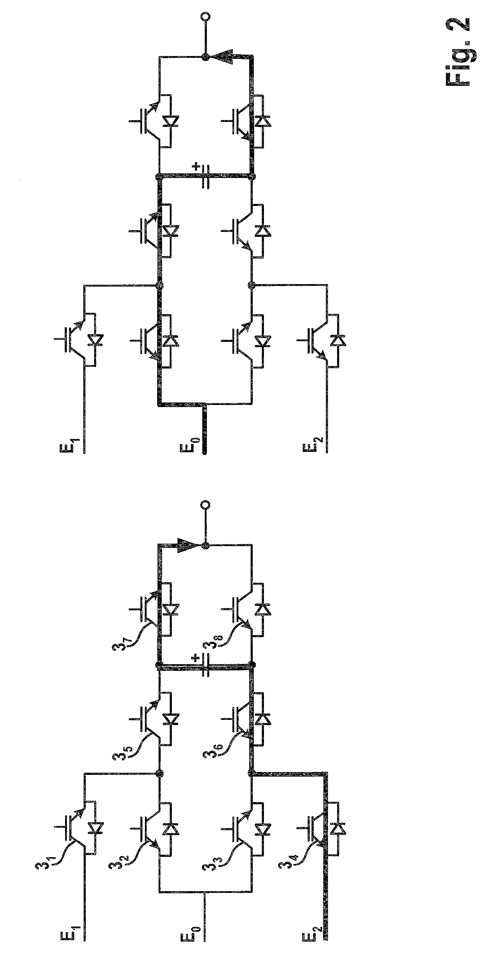

Fig. 2 zeigt für eine Schalteranordnung 2 zwei mögliche Strompfade (fett gezeichnet) zur Bereitstellung eines Ausgangsspannungsniveaus von $-V_{DC}/4$, die zu einem unterschiedlichen Vorzeichen des durch die fliegende Kapazität 5 fließenden Stromes führen. Wenn Schalterzustände zum Schalten dieser zwei Strompfade wechselweise angenommen werden und man eine hohe Schaltfrequenz im Vergleich zur Änderung des Ladestromes annimmt, bleibt die Kondensatorspannung der fliegenden Kapazität 5 im Wesentlichen konstant. Diese beiden Schalterzustände können einfach in einer geeigneten Weise sowohl bei der Pulsweitenmodulation als auch bei der Raumzeigermodulation kombiniert werden. Der resultierende durchschnittliche Zwischenpunktstrom, d.h. der Strom, der im Durchschnitt dem Zwischenpunkteingang $E_0$ entzogen wird, entspricht dem halben Phasenstrom für die Phasenspannung $-V_{DC}/4$. Allgemein ergibt sich der durchschnittliche Strom aus einem Spannungseingang als das Produkt des Verhältnisses der der Zeitdauer, während der der Strom aus dem betreffenden Spannungseingang gezogen wird, zu der gesamten Modulationsperiode mit dem Strom, der während der Modulationsperiode an dem Phasenausgang gezogen wurde.

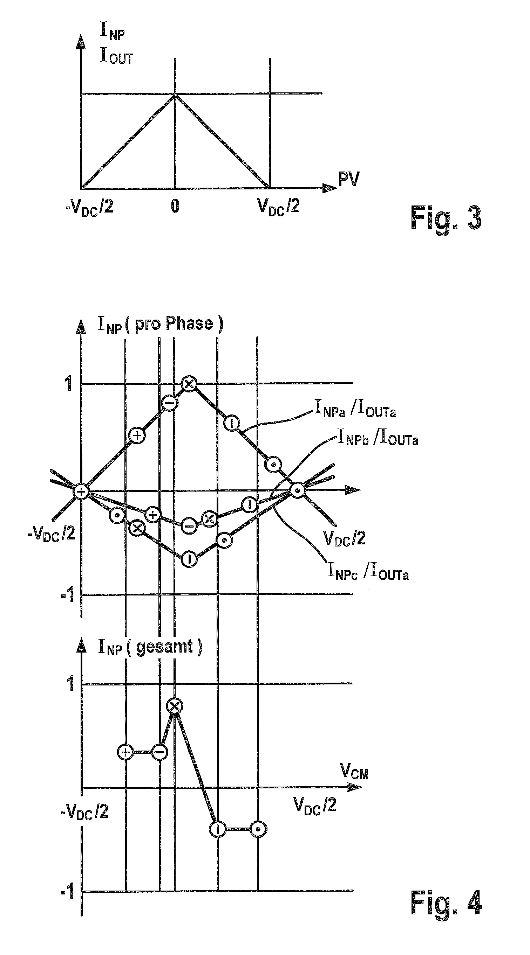

Wie in Fig. 3 gezeigt, ist der Zwischenpunktstrom bei Ausgeben der jeweiligen Phasenspannung PV=0 ($=V_{E0}$) maximal und nimmt auf Grund der Kombination von jeweils benachbarten Ausgangsspannungsniveaus zum Ausgeben der Phasenspannung PV linear auf 0 ab für PV= +/- UDC/2 ($V_{E1},V_{E2}$), da die Ausgangsspannungsniveaus gemäß einer geeigneten Modulation linear kombiniert werden. Das führt zu einer linearen Verschiebung des Stromes vom Zwischenpunkt zu einer der beiden Spannungseingänge E1 oder E2. Für jeden Phasenausgang PVa, PVb, PVc weist das normierte Zwischenpunktstromverhältnis (Zwischenpunktstrom $I_{NP}$ zu Ausgangsstrom $I_{Out}$) einen dreieckigen Funktionsverlauf über die Phasenspannung auf. In einem System mit mehreren Phasen weist jede Phase das in Fig. 3 gezeigte Verhalten auf. Der gesamte Zwischenpunktstrom kann durch Verändern der Gleichtaktspannung $V_{CM}$ variiert werden. Die Gleichtaktspannung $V_{CM}$ entspricht dem Mittelwert der momentanen Phasenspannungen PVa, PVb, PVc.

In Fig. 4 ist die Beziehung zwischen der Gleichtaktspannung $V_{CM}$ und dem resultierenden gesamten Zwischenpunktstrom (Strom aus dem Zwischenspannungseingang) für ein Dreiphasensystem grafisch dargestellt (Fig. 4 unten). Die resultierende Funktion ist nicht notwendigerweise monoton und umfasst nicht notwendigerweise positive und negative Werte für den Zwischenpunktstrom. Es besteht auch eine physikalische Begrenzung für die Gleichtaktspannung $V_{CM}$, die verwendet werden kann, da alle Spannungen innerhalb des Bereichs von $V_{E1} = V_{DC}/2$ und $V_{E2} = -V_{DC}/2$ liegen müssen. Die dargestellte Funktion ist nur für einen bestimmten Betriebspunkt, d.h. Zeitpunkt gültig. Im Wechselstrombetrieb ändern sich die Funktionen permanent, abhängig von sowohl dem Ausgangsstrom als auch den Phasenspannungen. Eine geeignete Gleichtaktspannungsfunktion kann verwendet werden, um einen bestimmten Zwischenpunktstrom zu erhalten, und eine Regelung kann dann verwendet werden, um die Zwischenpunktspannung zu steuern.

Ausgehend von drei Ausgangsspannungen, die bei dem Dreiphasensystem als Kombination der Phasenspannungen $V_{outa}$, $V_{outb}$, $V_{outc}$ an den Ausgängen PVa, PVb, PVc auftreten können, sind die zugehörigen Zwischenpunktströme $I_{NPa}$, $I_{NPb}$, $I_{NPc}$ normiert auf den Ausgangsstrom $I_{outa}$ an einem Phasenausgang PVa dargestellt. Einander zugeordnete Phasenspannungen PVa, PVb, PVc als momentane durch den Wechselrichter bereitgestellte Ausgangsspannungen sind durch das gleiche Symbol gekennzeichnet. Die untere Darstellung der Fig. 4 zeigt den gesamten Zwischenpunktstrom $I_{NP}$ als Summe der einzelnen Zwischenpunktströme $I_{NPa}$, $I_{NPb}$, $I_{NPc}$, die bei den momentanen Ausgangsspannungen vorliegen, aufgetragen über der Gleichtaktspannung $V_{CM}$ als Mittelwert der einzelnen Phasenspannungen $V_{outa}$, $V_{outb}$, Voutc.

Zuvor wurde beschrieben, wie sich der Zwischenpunktstrom in einem Dreiphasensystem ergibt, wenn zum Einstellen der Kondensatorspannung der fliegenden Kapazität 5 redundante Strompfade verwendet werden, die zu dem gleichen Ausgangsspannungsniveau führen.

Wie zuvor beschrieben, werden herkömmlich die Kondensatorspannungen über der fliegenden Kapazität in einem Ausgangsspannungsniveau ausgeglichen.

Wenn man jedoch die Kondensatorspannung der fliegenden Kapazität 5 durch Strompfade, die verschiedenen Ausgangsspannungsniveaus zugeordnet sind, ausgleicht, ergibt sich eine größere Anzahl von Freiheitsgraden.

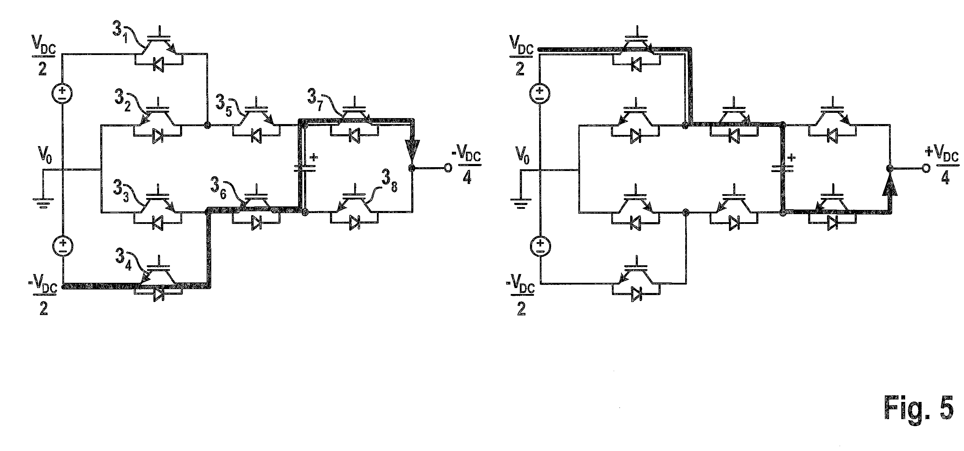

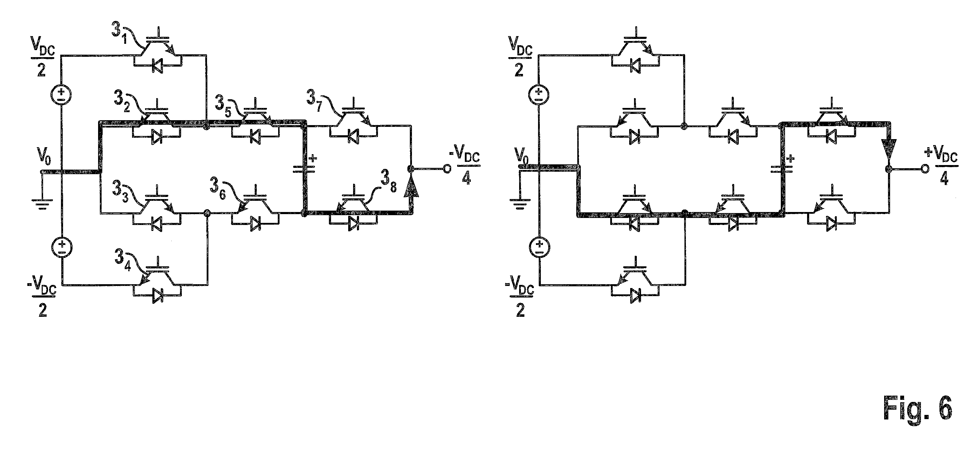

In den Figuren 5 und 6 sind jeweils zwei Strompfade durch die Schalteranordnung 2 einer Phase dargestellt, die zu verschiedenen Ausgangsspannungsniveaus, nämlich $-V_{DC}/4$ und $+V_{DC}/4$ führen. Die beiden Strompfade, die zu den verschiedenen Ausgangsspannungsniveaus führen, werden hierin Partnerzustände genannt, da sie gemäß einer Pulsweitenmodulation oder einer Raumzeigermodulation kombiniert verwendet werden, um die Kondensatorspannung über der fliegenden Kapazität 5 auszugleichen und gleichzeitig einen gewünschten Zwischenpunktstrom bewirken. Im vorliegenden Ausführungsbeispiel sind die Partnerzustände zwei diskrete Ausgangsspannungsniveaus voneinander entfernt, d.h. sie betreffen nicht zueinander benachbarte Ausgangsspannungsniveaus. Die hier gewählten Ausgangsspannungsniveaus sind $V_{DC}/4$ und $-V_{DC}/4$. Üblicherweise werden solche Partnerzustände nicht von herkömmlichen Modulationen, wie z.B. die Pulsweitenmodulation, verwendet.

Damit bei der Wahl von Partnerzuständen keine Verzerrung der Gegentaktspannungen an den Phasenausgängen auftritt, muss eine geeignete Gleichtaktspannungsfunktion angewendet werden. Im Prinzip müssen die anderen Phasen die Änderung der Gleichtaktspannung durch die Wahl der Partnerzustände auch vollziehen, um so permanent eine konstante Gegentaktspannung zu erreichen. Mit anderen Worten müssen geeignete Vektoren in der $\alpha,\beta$-Ebene, die die Partnervektoren beinhalten, ausgewählt werden.

Eine Vermeidung der Verzerrung in den Gegentaktspannungen ist nicht unbedingt erforderlich. Es kann auch vorgesehen sein, Verzerrungen der Gegentaktspannung zum Erhöhen der Freiheitsgrade bei der Auswahl von Schaltzuständen zuzulassen.

Zum Erreichen einer bestimmten Gegentaktspannung ist entscheidend, dass die Ströme in der fliegenden Kapazität unterschiedliche Vorzeichen haben und der Zwischenpunktstrom unterschiedliche Werte einnehmen kann, wobei dieselbe Kombination von Ausgangsspannungsniveaus erzeugt wird. In komplexeren Umrichtern sind diese nicht zwingend um den Nullpunkt herum gruppiert.

Fig. 5 oder Fig. 6 zeigen mögliche Partnerzustände. Die Schaltzustände der Fig. 5 führen zu Ausgangsspannungen von $-V_{DC}/4$ und $V_{DC}/4$. Durch Auswählen der beiden Schaltzustände der Fig. 5 in einem geeigneten Modulationsverfahren für jeweils die gleiche Zeitdauer gelangt man zu einem durchschnittlichen Zwischenpunktstrom für die betreffende Phase von Null. Ein maximaler Zwischenpunktstrom für die betreffende Phase wird erreicht, in dem die beiden Schaltzustände der Fig. 6 miteinander für die gleiche Zeitdauer kombiniert werden.

Im Gegensatz zu dem Ansatz, wie er in Fig. 2 anhand zweier redundanter Strompfade dargestellt ist, werden bei der Kombination von Schaltzuständen Schaltzustände ausgewählt, die zu unterschiedlichen Ausgangsspannungen führen. Während bei herkömmlichen Modulationsverfahren, wie in Fig. 3 dargestellt ist, der Zwischenpunktstrom eine eindeutige Funktion der Gleichtaktspannung (siehe Fig. 4) ist, ist dies bei der oben vorgeschlagenen Kombination von Schaltzuständen gemäß der Erfindung nicht mehr der Fall. Die Funktion der Fig. 3 könnte dann zur Darstellung der weiteren Zustände als eine Fläche möglicher Funktionswerte erweitert werden.

Durch die Hinzunahme der Möglichkeiten, auch Schaltzustände für unterschiedliche Ausgangsspannungen während einer Modulationsperiode zu kombinieren, wird der Freiheitsgrad für die Steuerung des Zwischenpunktstroms bzw. der Zwischenpunktspannung erheblich erhöht. Dadurch werden einige neue Möglichkeiten für die Definition von Raumvektoren in der $\alpha,\beta$-Ebene geschaffen.

Typen von neuen kombinierten Raumvektoren können definiert werden, indem jeweils zwei Schaltzustände mit gegenläufigen Kondensatorströmen durch die fliegenden Kapazität ausgewählt werden und diese für gleiche Zeitdauern angelegt werden, wodurch die Kondensatorspannung über der fliegenden Kapazität ausgeglichen bleibt.

Der neue Raumvektor ersten Typs betrifft Partnerzustände für mindestens eine bestimmte Phase, die innerhalb eines bestimmten Gegentaktspannungsvektors gefunden werden, wobei ein neuer Raumvektor (modifizierter Vektor) an dieser bestimmten Position mit neuen Zwischenpunktströmen definiert werden kann. Die nachfolgende Tabelle zeigt das Beispiel für einen dreiphasigen Wechselrichter für einen Gegentaktspannungsvektor von <100>.

| $S_a$ | $S_b$ | $S_c$ | $I_{NP}$ | $I_{FCa}$ | $I_{FCb}$ | $I_{FCc}$ | |
|---|---|---|---|---|---|---|---|
| 4 | $3_1$ | $3_1$ | 0 | 0 | -ib | -ic | |
| 4 | $3_1$ | $3_2$ | Ic | 0 | -ib | ic | I |
| 4 | $3_2$ | $3_1$ | Ib | 0 | ib | -ic | II |
| 4 | $3_2$ | $3_2$ | -ia | 0 | ib | ic | |
| $3_1$ | 2 | 2 | -ia | -ia | 0 | 0 | |
| $3_2$ | 2 | 2 | 0 | ia | 0 | 0 | |
| 2 | $1_1$ | $1_1$ | ia | 0 | ib | ic | |
| 2 | $1_1$ | $1_2$ | -ib | 0 | ib | -ic | I |
| 2 | $1_2$ | $1_1$ | -ic | 0 | -ib | ic | II |
| 2 | $1_2$ | $1_2$ | 0 | 0 | -ib | -ic | |
| $1_1$ | 0 | 0 | 0 | ia | 0 | 0 | |
| $1_2$ | 0 | 0 | ia | -ia | 0 | 0 | |

Dabei werden die Phasenspannungen der drei Phasen mit $S_a$, $S_b$, $S_c$ angegeben. Die Ausgangsspannungsniveaus werden durch die Ziffern 0 bis 4 angegeben, wobei "0" - $V_{DC}/2$, "1" -$V_{DC}/4$, "2" 0V, "3" $V_{DC}/4$ und "4" $V_{DC}/2$ entsprechen. Die Indizes "1" und "2" bei den codierten Ausgangsspannungsniveaus bezeichnen die entsprechenden Strompfade bei dem gewählten Schalterzustand, wobei "1" einen Strompfad ausgehend von einem von dem Zwischenpunkt verschiedenen Spannungseingang und "2" einen Strompfad ausgehend von dem Zwischenpunkt angibt. Die Spalte $I_{NP}$ gibt den gesamten Zwischenpunktstrom an, der sich bei Anlegen der Schalterzustände mit den Phasen a, b und c ergibt. Die weiteren Spalten geben den jeweiligen Kondensatorstrom $I_{FCa}$ , $I_{FCa}$ , $I_{FCa}$ über der fliegenden Kapazität 5 für jede Phase a, b, c an.

Die obige Tabelle definiert einen neuen Raumvektor des ersten Typs (modifizierte Vektoren). Die zwei mit I gekennzeichneten Schalterzustände führen zu einem Zwischenpunktstrom von $(i_b - i_c)/2$ (Die Halbierung resultiert aus dem verwendeten Tastverhältnis von 0,5. Bei anderen Tastverhältnissen TV ergibt sich $i_b/TV - i_c/(1-TV)$.). Die zwei mit II gekennzeichneten Partnerzustände führen zu einem Zwischenpunktstrom von $(i_c - i_b)/2$. Die möglichen Zwischenpunktströme bei der Standardmodulation sind dagegen $-i_a/2$ und $+i_a/2$ und jede lineare Kombination davon, was zu einem Bereich von $-i_a/2$ bis $+i_a/2$ führt. Es ist selbstverständlich, dass der Bereich des möglichen durchschnittlichen Zwischenpunktstroms für bestimmte Werte von Ausgangsströmen erweitert wird. Als Beispiel können die folgenden Ströme angenommen werden:

$$i_a = -0{,}5,\ i_b = -0{,}5\ \text{und}\ i_c = 1.$$

Der Bereich des durchschnittlichen Zwischenpunktstroms bei der herkömmlichen Vorgehensweise beträgt dann -0,5 bis 0,5. Mit den Partnerzuständen gemäß dem vorgeschlagenen Verfahren kann der Bereich -0.75, $(i_b - i_c)/2$ bis 0.75, $(i_c - i_b)/2$ erhalten werden und damit der Bereich der Variationsmöglichkeiten erhöht werden.

Dieser Effekt kann für eine erhebliche Verbesserung der Strombilanz bzw. der Spannung am Zwischenpunkt verwendet werden.

Ein zweiter neuer Raumvektortyp betrifft Partnerzustände für mindestens eine bestimmte Phase, die zu Variationen von Gegentaktspannungsvektoren um ein Ausgangsspannungsniveau führen. Dies ermöglicht es nicht, einen einzelnen neuen Gegentaktspannungsvektor verzerrungsfrei direkt zu implementieren. Jedoch können benachbarte Partnervektoren, die die Partnerzustände beinhalten, definiert werden. Diese Partnervektoren können dann in einem Modulator verwendet werden, der eine unverzerrte Gegentaktspannung erzeugt und gleichzeitig neue Freiheitsgrade zum Einstellen des Zwischenpunktstromes zur gleichen Zeit ermöglicht. Eine Möglichkeit besteht hierin, die Partnerzustände direkt in einer geeigneten Raumvektormodulation während einer Modulationsperiode anzuwenden. Eine weitere Möglichkeit besteht darin, einen virtuellen Vektor (virtueller Vektor des ersten Typs) anhand von mit einem Tastverhältnis von 0,5 gewählten Partnerzustände zu definieren und dann diesen resultierenden virtuellen Vektor in einer Raumvektormodulation zu verwenden.

Ein dritter neuer Raumvektortyp betrifft Partnerzustände für mindestens eine bestimmte Phase, die zu Variationen von Gegentaktspannungsvektoren um zwei Ausgangsspannungsniveaus führen. Auch hier können Partnervektoren definiert werden. Da sie jedoch nicht zueinander benachbart sind, können sie nicht direkt in einer nächsten Dreivektormodulation angewendet werden. Als Ergebnis müssen entweder der Zwischenpunktstrom ausgeglichen werden und die Kondensatorspannung der fliegenden Kapazitäten der Phasen über mehrere Grundperioden optimiert werden oder die Gegentaktspannung wird verzerrt, wenn das Ausgleichen mit nicht benachbarten Vektoren innerhalb einer Modulationsperiode vorgenommen wird. Auch hier besteht die Option darin, einen Modulator direkt zu verwenden, indem die Partnervektoren durch ein Optimierungsverfahren angewendet werden oder einen virtuellen Vektor (virtuellen Vektor zweiten Typs) zu definieren, der dann in einem regulären Raumvektormodulator angewendet werden kann.

Raumvektorfolgen können auch auf dem gleichen Prinzip basierend definiert werden, indem Partnerzustände kombiniert werden, ohne bestimmte Partnervektoren zu berücksichtigen. Das kann z.B. durch Optimieren einer Vektorfolge über einer ganze Modulationsperiode vorgenommen werden, die automatisch die Partnerzustände verwendet. In diesem Fall ist ein Optimierungsverfahren notwendig.

In jedem der oben genannten Fälle müssen die Partnerzustände nicht für die gleiche Zeitdauer angelegt werden. Ein virtueller Vektor kann mit einem benachbarten Vektor kombiniert werden, um einen Raumzeiger zu bilden, wobei sich der benachbarte Vektor mit einem Teil des virtuellen Vektors überschneidet. Bei einer direkten Raumzeigermodulation, die einen Partnervektor beinhaltet, kann die Anlegezeit naturgemäß variieren.

Die Verfügbarkeit von Partnerzuständen und resultierenden neuen Raumvektoren kann für eine Phase herausgefunden werden. Das Ergebnis kann dann auf alle drei Phasen erweitert werden. Nachfolgend wird das Beispiel der Phase b gewählt. Es gibt einen bestimmten Bereich, bei der die Phase b $+V_{DC}/4$ annehmen kann, und es gibt einen bestimmten Bereich, in dem die Phase b $-V_{DC}/4$ annehmen kann. Die Überschneidung oder Abstand zwischen diesen Bereichen bestimmt den Typ des neuen Raumvektors, der an einem bestimmten Punkt verfügbar ist.

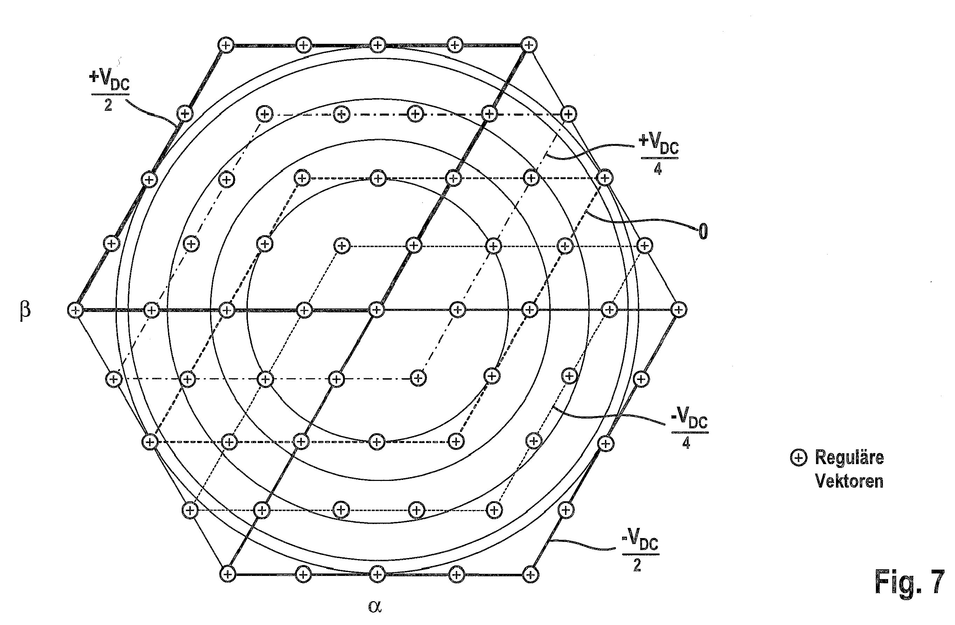

Fig. 7 zeigt die möglichen Vektorräume für Gegentaktspannungen für ein bestimmtes Ausgangsspannungsniveau in der Phase b als Rhomboide, wobei die Rhomboide von rechts unten nach links oben der Reihe nach den Ausgangsspannungsnivea-$V_{DC}/2$, $-V_{DC}/4$ ... $V_{DC}/2$ entsprechen. Bei fünf Ausgangsspannungsniveaus ergeben sich 61 diskrete Vektoren für die Gegentaktspannungen, die in einem Hexagon angeordnet sind.

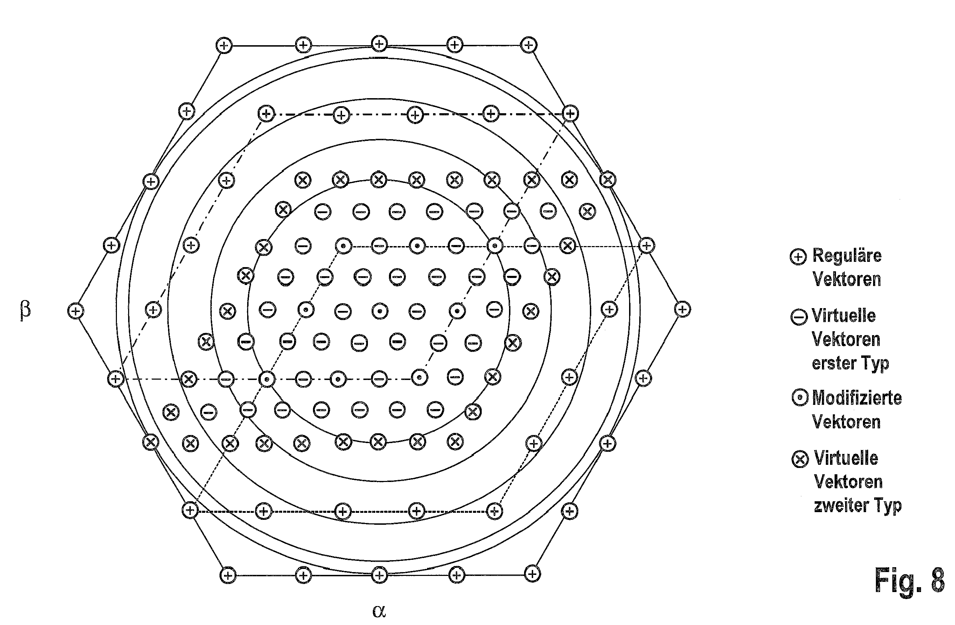

Wie in der Darstellung der Fig. 8 gezeigt ist, die aus Gründen der übersichtlicheren Darstellung nur die Rhomboide für $-V_{DC}/4$ und $V_{DC}/4$ angibt, ist in der Schnittmenge zwischen zwei Rhomboiden der Phase b z.B. für $V_{DC}/4$ und -V$_{DC}$/4 eine Kombination von zwei Zuständen in einem modifizierten Raumvektor möglich. Wo zwei Zustände voneinander durch ein Ausgangsspannungsniveau (benachbarte diskrete Vektoren, Abstand der Punkte in Fig. 7) voneinander entfernt sind, kann ein virtueller Vektor (erster Typ) in der Mitte der zwei Ausgangsspannungsniveaus definiert werden, d.h. zwischen zwei diskreten Vektoren.

Wo zwei Zustände voneinander durch zwei Ausgangsspannungsniveaus getrennt sind, kann ein virtueller Raumvektor (zweiter Typ) in der Mitte der zwei Ausgangsspannungsniveaus definiert werden, d.h. zwischen oder anstelle der diskreten Vektoren. Virtuelle Raumvektoren des zweiten Typs sind auch bei allen internen Punkten möglich, die dem modifizierten virtuellen Raumvektor des zweiten Typs entsprechen.

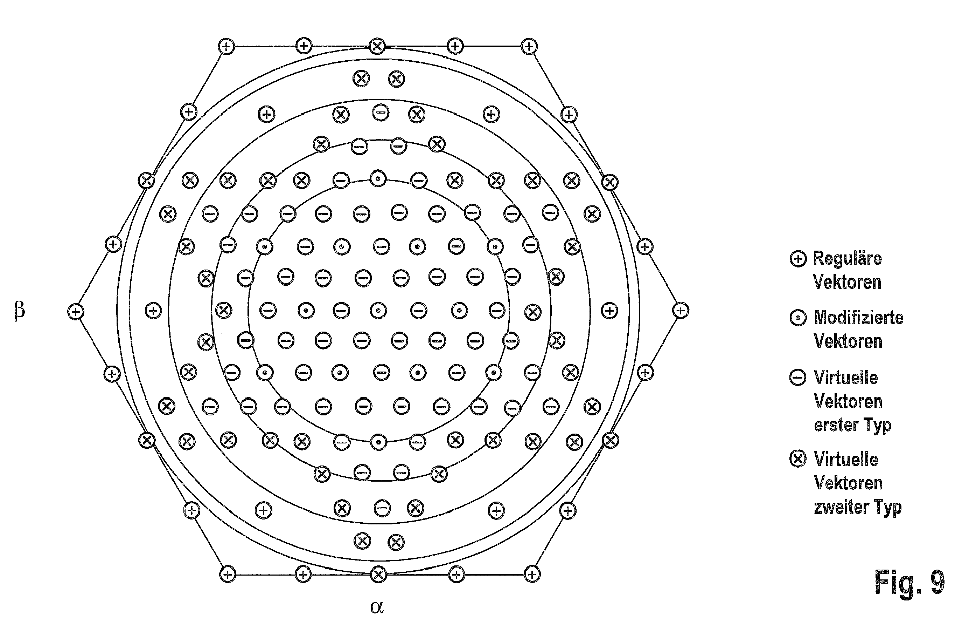

Dieser Ansatz kann auf alle drei Phasen angewendet werden, was zu einem Raumvektorgraph der Fig. 9 führt. Die Eigenschaften können wie folgt zusammengefasst werden:

- Alle drei Vektortypen (modifizierte Raumvektoren, virtuelle Vektoren ersten Typs, virtuelle Vektoren zweiten Typs) können die durchschnittliche Kondensatorspannung der fliegenden Kapazitäten bei einem geeigneten Tastverhältnis konstant halten bzw. gemäß einer Vorgabe variieren. Es kann jedoch auch eine leichte Variation oder eine Korrektur der durchschnittlichen Kondensatorspannung erwünscht sein.
- Alle drei Typen von Vektoren erweitern die Freiheitsgrade zum Einstellen des verfügbaren Zwischenpunktstromes.
- Alle drei Typen führen zu einer mit hoher Frequenz variierenden Gleichtaktspannung.
- Die modifizierten Raumvektoren verursachen keine Gegentaktverzerrung.
- Der virtuelle Raumvektor ersten Typs kann eine moderate Gegentaktspannungsverzerrung bewirken, kann jedoch auch zu einer Gegentaktverzerrungsfreien herkömmlichen Ausgabe der drei nächsten Raumvektoren, abhängig von dem Referenzvektor, führen.
- Der virtuelle Raumvektor zweiten Typs wird immer eine Gegentaktverzerrung bewirken, da diskrete Vektoren verwendet werden, die zwei Ausgangsspannungsniveaus voneinander beabstandet sind, so dass nie ein Ausgeben der drei nächstgelegenen Raumvektoren erreicht wird.
- Virtuelle Raumvektoren zweiten Typs sind auch an allen Punkten des modifizierten virtuellen Raumvektors und des virtuellen Raumvektors ersten Typs verfügbar.

Die Menge der verfügbaren Vektoren ist in Fig. 9 dargestellt. Sie basiert auf den Prinzipien der Fig. 5 und Fig. 6, in denen die Kombination von redundanten Pfaden mit unterschiedlichen Ausgangsspannungsniveaus erläutert wird. Keine zusätzlichen Vektoren außerhalb des sternförmigen Bereiches sind möglich.

Wie man aus Fig. 9 entnehmen kann, sind die modifizierten Vektoren bis zu 50% der Gesamtleistung verfügbar und bis zu ungefähr 65% des gesamten Modulationsindex verwendbar. Der virtuelle Vektor ersten Typs ist bis 75% verfügbar und bis zu ungefähr 90% des gesamten Modulationsindex verwendbar. Der virtuelle Vektor Typ 2 ist verfügbar bis 100% des gesamten Modulationsindex.

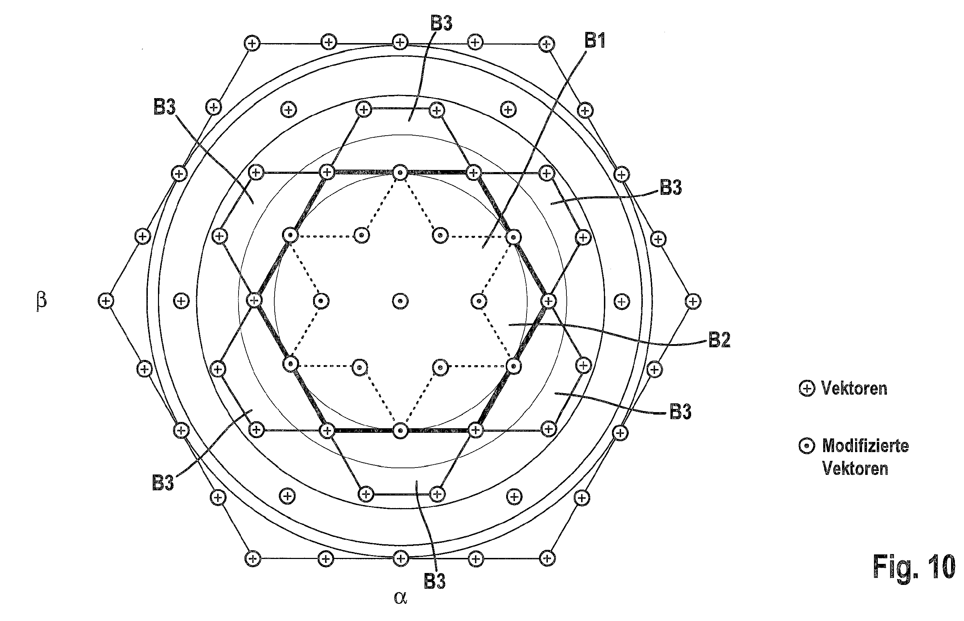

Die modifizierten Vektoren sind besonders attraktiv, da sie mit einem diskreten Vektor erzeugt werden können. Fig. 10 zeigt daher den Bereich der Anwendbarkeit der modifizierten Vektoren.

Im inneren Bereich B1 können auf allen drei Ecken eines Modulationsdreiecks modifizierte Vektoren verwendet werden. In den mit B2 gekennzeichneten Bereichen können bis zu zwei modifizierte Vektoren innerhalb der Modulationsperiode verwendet werden und in den mit B3 gekennzeichneten Bereichen B3 kann nur ein modifizierter Vektoren innerhalb der Modulationsperiode verwendet werden. Außerhalb der Bereiche B1, B2, B3 kann kein modifizierter Raumvektor verwendet werden.

Wie man erkennen kann, können für einen bestimmten Bereich sogar mehrere modifizierte Vektoren innerhalb einer Modulationsperiode verwendet werden, und es können sogar mehrere Partnerzustände innerhalb eines modifizierten Vektors in bestimmten Fällen angewendet werden. Dies verdeutlicht einen sehr großen Freiheitsgrad für die Steuerung der Kondensatorspannungen der fliegenden Kapazitäten und des Zwischenpunktstromes bzw. der Zwischenpunktspannung, was zu einer erheblichen Leistungsverbesserung führt.

Das zuvor beschriebene Verfahren verwendet weiter auseinander liegende durchschnittliche maximale und minimale Zwischenpunktströme an den meisten Betriebspunkten, wodurch die Steuerbarkeit erheblich verbessert wird. Dies führt zu einer höheren Robustheit des Wechselrichters, da die Steuerung schneller reagieren kann und effizienter auf Störungen reagiert.

Ein weiterer Vorteil besteht darin, dass die fliegenden Kapazitäten mit einer geringeren Kapazität, d.h. baulich kleiner, vorgesehen werden können, da der Sicherheitsmargin reduziert werden kann.

Bei der Realisierung eines Wechselrichters können die Schalteranordnungen 2$_a$, 2$_b$, 2$_c$ verschieden ausgebildet sein und nur teilweise eine fliegende Kapazität 5 umfassen.

**Bezugszeichenliste**

| 1 | Wechselrichter |
|---|---|
| 2, $2_a$, $2_b$, $2_c$ | Schalteranordnungen |
| 3, 3, bis $3_8$ | Schalter |
| 4 | Diode |
| 5 | fliegende Kapazität |
| 7 | Spannungsquellen |
| 10 | Steuereinheit |
| PVa, PVb, PVc | Phasenausgänge |
| $I_{NP}$, $I_{NPa}$, $I_{NPb}$, $I_{NPc}$ | Zwischenpunktstrom |
| $V_{E1}$, $V_{E0}$, $V_{E2}$ | Eingangsspannung |
| $E_1$, $E_0$, $E_2$ | Spannungseingang |
| $V_{CM}$ | Gleichtaktspannung |

**Patentansprüche**

**1.** Mehrphasiger Wechselrichter (1) zum Bereitstellen von Phasenspannungen an mehreren Phasenausgängen (PVa, PVb, PVc), umfassend:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc), zugeordnete Schalteranordnungen, wobei in mindestens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen,

wobei mindestens ein Teil der Strompfade über eine fliegende Kapazität (5) in der Schalteranordnung ($2_a$, $2_b$, $2_c$) verläuft;

- eine Steuereinheit (10), die ausgebildet ist, um die Strompfade in der mindestens einen Schalteranordnung ($2_a$, $2_b$, $2_c$) gemäß Schaltzuständen auszuwählen,
- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
die Steuereinheit ausgebildet ist, um die Strompfade in der mindestens einen Schalteranordnungen ($2_a$, $2_b$, $2_c$) auszuwählen, so dass die entsprechende Phasenspannung durch Kombination von mindestens zwei Schaltzuständen in der mindestens einen Schalteranordnung ($2_a$, $2_b$, $2_c$) mit unterschiedlichen, nicht zueinander benachbarten Ausgangsspannungsniveaus während der einen oder den mehreren Zeitperioden generiert wird, um einen gewünschten durchschnittlichen Strom aus mindestens einem der Spannungseingänge ($E_1$, $E_0$, $E_2$) einzustellen.

**2.** Wechselrichter (1) nach Anspruch 1, wobei die Zeitperiode einer Modulationsperiode eines Modulationsverfahrens, insbesondere einer Pulsweitenmodulation oder einer Raumvektormodulation, entspricht.

**3.** Wechselrichter (1) nach Anspruch 1, wobei die Zeitperiode einer variablen Zeitdauer eines Modulationsverfahrens entspricht, das keine konstante Modulationsperiode verwendet.

**4.** Wechselrichter (1) nach einem der Ansprüche 1 bis 3, wobei die Zeitperiode gleich oder kürzer ist als ein Sechstel einer Grundperiode einer der auszugebenden Phasenspannungen.

**5.** Wechselrichter (1) nach einem der Ansprüche 1 bis 4,
**dadurch gekennzeichnet, dass** die Steuereinheit (10) ausgebildet ist, um die Gegentaktspannungen zwischen den Phasenausgängen (PVa, PVb, PVc) aller Schalteranordnungen ($2_a$, $2_b$, $2_c$) während der Zeitperiode gemäß einem Modulationsverfahren zu variieren, um eine durchschnittliche Gegentaktspannung konstant zu halten.

**6.** Wechselrichter (1) nach einem der Ansprüche 1 bis 4,
**dadurch gekennzeichnet, dass** die Steuereinheit (10) die Schalteranordnungen ($2_a$, $2_b$, $2_c$) ansteuert, um Phasenspannungen zu erzeugen, die zu einer Variation mindestens einer der Gegentaktspannungen um maximal ein Ausgangsspannungsniveau führt.

**7.** Wechselrichter (1) nach Anspruch 6,
**dadurch gekennzeichnet, dass** die Steuereinheit (10) ausgebildet ist, um während mehrerer Zeitperioden die durchschnittlichen Gegentaktspannungen konstant zu halten.

**8.** Wechselrichter (1) nach Anspruch einem der Ansprüche 1 bis 4 ,
**dadurch gekennzeichnet, dass** die Steuereinheit (10) ausgebildet ist, um die Gegentaktspannungen zwischen den Phasenausgängen (PVa, PVb, PVc) während einer Zeitperiode um maximal zwei Ausgangsspannungsniveaus zu variieren.

**9.** Wechselrichter (1) nach einem der Ansprüche 1 bis 8,
**dadurch gekennzeichnet, dass** die Steuereinheit (10) ausgebildet ist, um für jede Schalteranordnung ($2_a$, $2_b$, $2_c$) die Schaltzustände einer Zeitperiode so auszuwählen, dass sie entweder zu einander entgegen gesetzten Stromrichtungen in der fliegenden Kapazität (5) oder zu keinem Stromfluss in der fliegenden Kapazität (5) führen.

**10.** Wechselrichter (1) nach einem der Ansprüche 1 bis 9,
**dadurch gekennzeichnet, dass** die Steuereinheit (10) ausgebildet ist, um für jede der Schalteranordnungen ($2_a$, $2_b$, $2_c$) die Schaltzustände während der Zeitperiode zu kombinieren, so dass für mindestens einen der Spannungseingänge ($E_1$, $E_0$, $E_2$) ein durchschnittlicher Strom oder ein bestimmtes Stromprofil eingestellt wird.

**11.** Wechselrichter (1) nach Anspruch 10,
**dadurch gekennzeichnet, dass** die Steuereinheit (10) ausgebildet ist, um für jede der Schalteranordnungen ($2_a$, $2_b$, $2_c$) die Schaltzustände während der Zeitperiode zu kombinieren, so dass für einen der Spannungseingänge ($E_1$, $E_0$, $E_2$), der ein mittleres Eingangsspannungspotential bereitstellt, ein durchschnittlicher Strom von Null eingestellt wird.

**12.** Wechselrichter (1) nach einem der Ansprüche 1 bis 10,
**dadurch gekennzeichnet, dass** die Steuereinheit (10) ausgebildet ist, um als die Schaltzustände bei der auszugebenden Phasenspannung während der Zeitperiode oder während einer bestimmten Anzahl von Zeitperioden Schaltzustände abhängig von einem einzustellenden durchschnittlichen Strom auszuwählen, die zu einer Strombilanz des mindestens einen Spannungseingangs ($E_1$, $E_0$, $E_2$) während der oder der mehreren Zeitperioden mit einem durchschnittlichen Strom als dem einzustellenden durchschnittlichen Strom führen.

**13.** Wechselrichter (1) nach Anspruch 12,
**dadurch gekennzeichnet, dass** die Steuereinheit (10) ausgebildet ist, um beim Auswählen der Schaltzustände das Einstellen der durchschnittlichen Kondensatorspannung über der fliegenden Kapazität (5) gegenüber dem Einstellen des durchschnittlichen Stroms des mindestens einen Spannungseingangs ($E_1$, $E_0$, $E_2$) zu priorisieren.

**14.** Wechselrichter (1) nach einem der Ansprüche 1 bis 13,
**dadurch gekennzeichnet, dass** ein erster, ein zweiter und ein dritter Spannungseingang ($E_1$, $E_0$, $E_2$) vorgesehen sind,
wobei mindestens eine der Schalteranordnungen ($2_a$, $2_b$, $2_c$) eine erste Schaltergruppe aufweist, um entweder den ersten Spannungseingang ($E_1$) oder den zweiten Spannungseingang ($E_2$) oder keinen der Spannungseingänge ($E_1$, $E_0$, $E_2$) mit einem ersten Anschluss der fliegenden Kapazität (5) zu verbinden,
wobei die mindestens eine Schalteranordnung ($2_a$, $2_b$, $2_c$) eine zweite Schaltergruppe aufweist, um entweder den zweiten Spannungseingang ($E_2$) oder den dritten Spannungseingang ($E_0$) oder keinen der Spannungseingänge ($E_1$, $E_0$, $E_2$) mit einem zweiten Anschluss der fliegenden Kapazität (5) zu verbinden,
wobei eine dritte Schaltergruppe vorgesehen ist, um entweder den ersten Anschluss oder den zweiten Anschluss der fliegenden Kapazität (5) mit dem Phasenausgang (PVa, PVb, PVc) zu verbinden.

**15.** Verfahren zum Betreiben eines mehrphasigen Wechselrichters (1) zum Bereitstellen von Phasenspannungen an mehreren Phasenausgängen (PVa, PVb, PVc),
wobei der Wechselrichter (1) umfasst:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc) zugeordnete Schalteranordnungen ($2_a$, $2_b$, $2_c$), wobei in mindestens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen, wobei mindestens ein Teil der Strompfade über eine fliegende Kapazität (5) in der Schalteranordnung ($2_a$, $2_b$, $2_c$) verläuft;

wobei der Wechselrichter (1) betrieben wird, indem die Strompfade in der mindestens einen Schalteranordnung ($2_a$, $2_b$, $2_c$) gemäß Schaltzuständen ausgewählt werden:

- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren der Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
das Auswählen der Strompfade in der mindestens einen Schalteranordnungen ($2_a$, $2_b$, $2_c$) durchgeführt wird, so dass die entsprechende Phasenspannung durch Kombination von mindestens zwei Schaltzuständen mit unterschiedlichen, nicht zueinander benachbarten Ausgangsspannungsniveaus während der einen oder den mehreren Zeitperioden generiert werden, um einen gewünschten durchschnittlichen Strom aus mindestens einem der Spannungseingänge ($E_1$, $E_0$, $E_2$) einzustellen.

**16.** Verfahren nach Anspruch 15, wobei die Zeitperiode einer Modulationsperiode eines Modulationsverfahrens, insbesondere einer Pulsweitenmodulation oder einer Raumvektormodulation, entspricht.

**17.** Verfahren nach Anspruch 15, wobei die Zeitperiode einer variablen Zeitdauer eines Modulationsverfahrens entspricht, das keine konstante Modulationsperiode verwendet.

**18.** Verfahren nach einem der Ansprüche 15 bis 17, wobei die Zeitperiode gleich oder kürzer ist als ein Sechstel einer Grundperiode einer der auszugebenden Phasenspannungen.

**19.** Verfahren nach einem der Ansprüche 15 bis 18,
**dadurch gekennzeichnet, dass** die Gegentaktspannungen zwischen den Phasenausgängen (PVa, PVb, PVc) aller Schalteranordnungen ($2_a$, $2_b$, $2_c$) während der Zeitperiode konstant gehalten werden.

**20.** Verfahren nach einem der Ansprüche 15 bis 18,
**dadurch gekennzeichnet, dass** die Gegentaktspannungen zwischen den Phasenausgängen (PVa, PVb, PVc) während einer Zeitperiode um maximal zwei Ausgangsspannungsniveaus variiert werden.

**21.** Verfahren nach einem der Ansprüche 15 bis 18,
**dadurch gekennzeichnet, dass** die Phasenspannungen erzeugt werden, so dass sie zu einer Variation mindestens einer der Gegentaktspannungen um maximal ein Ausgangsspannungsniveau führen.

**22.** Verfahren nach Anspruch 21,
**dadurch gekennzeichnet, dass** während mehrerer Zeitperioden die durchschnittlichen Gegentaktspannungen konstant gehalten werden.

**23.** Verfahren nach einem der Ansprüche 15 bis 22,
**dadurch gekennzeichnet, dass** für jede Schalteranordnung ($2_a$, $2_b$, $2_c$) die Schaltzustände einer Zeitperiode so ausgewählt werden, dass sie entweder zu einander entgegen gesetzten Stromrichtungen in der fliegenden Kapazität (5) oder zu keinem Stromfluss in der fliegenden Kapazität (5) führen.

**24.** Verfahren nach einem der Ansprüche 15 bis 23,
**dadurch gekennzeichnet, dass** für jede der Schalteranordnungen ($2_a$, $2_b$, $2_c$) die Schaltzustände während der Zeitperiode kombiniert werden, so dass für mindestens einen der Spannungseingänge ($E_1$, $E_0$, $E_2$) ein durchschnittlicher Strom oder ein bestimmtes Stromprofil eingestellt wird.

**25.** Verfahren nach Anspruch 24,
**dadurch gekennzeichnet, dass** für jede der Schalteranordnungen ($2_a$, $2_b$, $2_c$) die Schaltzustände während der Zeitperiode kombiniert werden, so dass für einen der Spannungseingänge ($E_1$, $E_0$, $E_2$), der ein mittleres Eingangs- spannungspotential bereitstellt, ein durchschnittlicher Strom von Null eingestellt wird.

**26.** Verfahren nach einem der Ansprüche 15 bis 25,
**dadurch gekennzeichnet, dass** als die Schaltzustände bei der auszugebenden Phasenspannung während der Zeitperiode oder während einer bestimmten Anzahl von Zeitperioden Schaltzustände abhängig von einem einzustellenden durchschnittlichen Strom ausgewählt werden, die zu einer Strombilanz des mindestens einen Span- nungseingangs ($E_1$, $E_0$, $E_2$) während der oder der mehreren Zeitperioden mit einem durchschnittlichen Strom als dem einzustellenden durchschnittlichen Strom führen.

**27.** Verfahren nach Anspruch 26,
**dadurch gekennzeichnet, dass** beim Auswählen der Schaltzustände das Einstellen der durchschnittlichen Kondensatorspannung über der fliegenden Kapazität (5) gegenüber dem Einstellen des durchschnittlichen Stroms des mindestens einen Spannungseingangs ($E_1$, $E_0$, $E_2$) priorisiert wird.


**Geänderte Patentansprüche gemäss Regel 137(2) EPÜ.**

**1.** Mehrphasiger Wechselrichter (1) zum Bereitstellen von Phasenspannungen an mehreren Phasenausgängen (PVa, PVb, PVc), umfassend:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc), zugeordnete Schalteranordnungen, wobei in min- destens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen, wobei mindestens ein Teil der Strompfade über eine fliegende Kapazität (5) in der Schalteranordnung ($2_a$, $2_b$, $2_c$) verläuft;
- eine Steuereinheit (10), die ausgebildet ist, um die Strompfade in der mindestens einen Schalteranordnung ($2_a$, $2_b$, $2_c$) gemäß Schaltzuständen auszuwählen,

- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
die Steuereinheit ausgebildet ist, um die Strompfade in der mindestens einen Schalteranordnungen ($2_a$, $2_b$, $2_c$) auszuwählen, so dass die entsprechende Phasenspannung durch Kombination von mindestens zwei Schaltzuständen in der mindestens einen Schalteranordnung ($2_a$, $2_b$, $2_c$) mit unterschiedlichen, nicht zueinander benachbarten Ausgangsspannungsniveaus während der einen oder den mehreren Zeitperioden generiert wird, um einen gewünschten durchschnittlichen Strom aus mindestens einem der Spannungseingänge ($E_1$, $E_0$, $E_2$) einzustellen, und dass die Steuereinheit (10) die Schalteranordnungen ($2_a$, $2_b$, $2_c$) ansteuert, um Phasenspannungen zu erzeugen, die zu einer Variation mindestens einer der Gegentaktspannungen um maximal ein Ausgangsspannungsniveau führt.

**2.** Mehrphasiger Wechselrichter (1) zum Bereitstellen von Phasenspannungen an mehreren Phasenausgängen (PVa, PVb, PVc), umfassend:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc), zugeordnete Schalteranordnungen, wobei in min- destens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen, wobei mindestens ein Teil der Strompfade über eine fliegende Kapazität (5) in der Schalteranordnung ($2_a$, $2_b$, $2_c$) verläuft;
- eine Steuereinheit (10), die ausgebildet ist, um die Strompfade in der mindestens einen Schalteranordnung ($2_a$, $2_b$, $2_c$) gemäß Schaltzuständen auszuwählen,

- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
die Steuereinheit ausgebildet ist, um die Strompfade in der mindestens einen Schalteranordnungen ($2_a$, $2_b$, $2_c$) auszuwählen, so dass die entsprechende Phasenspannung durch Kombination von mindestens zwei Schaltzuständen in der mindestens einen Schalteranordnung ($2_a$, $2_b$, $2_c$) mit unterschiedlichen, nicht zueinander benachbarten Ausgangsspannungsniveaus während der einen oder den mehreren Zeitperioden generiert wird, um einen gewünschten durchschnittlichen Strom aus mindestens einem der Spannungseingänge ($E_1$, $E_0$, $E_2$) einzustellen, und dass die Steuereinheit (10) ausgebildet ist, um die Gegentaktspannungen zwischen den Phasenausgängen (PVa, PVb, PVc) während einer Zeitperiode um maximal zwei Ausgangsspannungsniveaus zu variieren.

**3.** Wechselrichter (1) nach Anspruch 1 oder 2, wobei die Zeitperiode einer Modulationsperiode eines Modulationsverfahrens, insbesondere einer Pulsweitenmodulation oder einer Raumvektormodulation, entspricht.

**4.** Wechselrichter (1) nach Anspruch 1 oder 2, wobei die Zeitperiode einer variablen Zeitdauer eines Modulationsverfahrens entspricht, das keine konstante Modulationsperiode verwendet.

**5.** Wechselrichter (1) nach einem der Ansprüche 1 bis 4, wobei die Zeitperiode gleich oder kürzer ist als ein Sechstel einer Grundperiode einer der auszugebenden Phasenspannungen.

**6.** Wechselrichter (1) nach Anspruch 1,
**dadurch gekennzeichnet, dass** die Steuereinheit (10) ausgebildet ist, um während mehrerer Zeitperioden die durchschnittlichen Gegentaktspannungen konstant zu halten.

**7.** Wechselrichter (1) nach einem der Ansprüche 1 bis 6,
**dadurch gekennzeichnet, dass** die Steuereinheit (10) ausgebildet ist, um für jede Schalteranordnung ($2_a$, $2_b$, $2_c$) die Schaltzustände einer Zeitperiode so auszuwählen, dass sie entweder zu einander entgegen gesetzten Stromrichtungen in der fliegenden Kapazität (5) oder zu keinem Stromfluss in der fliegenden Kapazität (5) führen.

**8.** Wechselrichter (1) nach einem der Ansprüche 1 bis 7,
**dadurch gekennzeichnet, dass** die Steuereinheit (10) ausgebildet ist, um für jede der Schalteranordnungen ($2_a$, $2_b$, $2_c$) die Schaltzustände während der Zeitperiode zu kombinieren, so dass für mindestens einen der Spannungseingänge ($E_1$, $E_0$, $E_2$) ein durchschnittlicher Strom oder ein bestimmtes Stromprofil eingestellt wird.

**9.** Wechselrichter (1) nach Anspruch 8,
**dadurch gekennzeichnet, dass** die Steuereinheit (10) ausgebildet ist, um für jede der Schalteranordnungen ($2_a$, $2_b$, $2_c$) die Schaltzustände während der Zeitperiode zu kombinieren, so dass für einen der Spannungseingänge ($E_1$, $E_0$, $E_2$), der ein mittleres Eingangsspannungspotential bereitstellt, ein durchschnittlicher Strom von Null eingestellt wird.

**10.** Wechselrichter (1) nach einem der Ansprüche 1 bis 8,
**dadurch gekennzeichnet, dass** die Steuereinheit (10) ausgebildet ist, um als die Schaltzustände bei der auszugebenden Phasenspannung während der Zeitperiode oder während einer bestimmten Anzahl von Zeitperioden Schaltzustände abhängig von einem einzustellenden durchschnittlichen Strom auszuwählen, die zu einer Strombilanz des mindestens einen Spannungseingangs ($E_1$, $E_0$, $E_2$) während der oder der mehreren Zeitperioden mit einem durchschnittlichen Strom als dem einzustellenden durchschnittlichen Strom führen.

**11.** Wechselrichter (1) nach Anspruch 10,
**dadurch gekennzeichnet, dass** die Steuereinheit (10) ausgebildet ist, um beim Auswählen der Schaltzustände das Einstellen der durchschnittlichen Kondensatorspannung über der fliegenden Kapazität (5) gegenüber dem Einstellen des durchschnittlichen Stroms des mindestens einen Spannungseingangs ($E_1$, $E_0$, $E_2$) zu priorisieren.

**12.** Wechselrichter (1) nach einem der Ansprüche 1 bis 11,
**dadurch gekennzeichnet, dass** ein erster, ein zweiter und ein dritter Spannungseingang ($E_1$, $E_0$, $E_2$) vorgesehen sind,
wobei mindestens eine der Schalteranordnungen ($2_a$, $2_b$, $2_c$) eine erste Schaltergruppe aufweist, um entweder den ersten Spannungseingang ($E_1$) oder den zweiten Spannungseingang ($E_2$) oder keinen der Spannungseingänge ($E_1$, $E_0$, $E_2$) mit einem ersten Anschluss der fliegenden Kapazität (5) zu verbinden,
wobei die mindestens eine Schalteranordnung ($2_a$, $2_b$, $2_c$) eine zweite Schaltergruppe aufweist, um entweder den zweiten Spannungseingang ($E_2$) oder den dritten Spannungseingang ($E_0$) oder keinen der Spannungseingänge ($E_1$, $E_0$, $E_2$) mit einem zweiten Anschluss der fliegenden Kapazität (5) zu verbinden,
wobei eine dritte Schaltergruppe vorgesehen ist, um entweder den ersten Anschluss oder den zweiten Anschluss der fliegenden Kapazität (5) mit dem Phasenausgang (PVa, PVb, PVc) zu verbinden.

**13.** Verfahren zum Betreiben eines mehrphasigen Wechselrichters (1) zum Bereitstellen von Phasenspannungen an mehreren Phasenausgängen (PVa, PVb, PVc), wobei der Wechselrichter (1) umfasst:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc) zugeordnete Schalteranordnungen ($2_a$, $2_b$, $2_c$), wobei in mindestens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen,

wobei mindestens ein Teil der Strompfade über eine fliegende Kapazität (5) in der Schalteranordnung ($2_a$, $2_b$, $2_c$) verläuft;
wobei der Wechselrichter (1) betrieben wird, indem die Strompfade in der mindestens einen Schalteranordnung ($2_a$, $2_b$, $2_c$) gemäß Schaltzuständen ausgewählt werden:

- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren der Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
das Auswählen der Strompfade in der mindestens einen Schalteranordnungen ($2_a$, $2_b$, $2_c$) durchgeführt wird, so dass die entsprechende Phasenspannung durch Kombination von mindestens zwei Schaltzuständen mit unterschiedlichen, nicht zueinander benachbarten Ausgangsspannungsniveaus während der einen oder den mehreren Zeitperioden generiert werden, um einen gewünschten durchschnittlichen Strom aus mindestens einem der Spannungseingänge ($E_1$, $E_0$, $E_2$) einzustellen, und
dass die Gegentaktspannungen zwischen den Phasenausgängen (PVa, PVb, PVc) während einer Zeitperiode um maximal zwei Ausgangsspannungsniveaus variiert werden.

**14.** Verfahren zum Betreiben eines mehrphasigen Wechselrichters (1) zum Bereitstellen von Phasenspannungen an mehreren Phasenausgängen (PVa, PVb, PVc), wobei der Wechselrichter (1) umfasst:

- mindestens drei Spannungseingänge ($E_1$, $E_0$, $E_2$) zum Empfangen von drei verschiedenen Eingangsspannungspotentialen;
- mehrere, jeweils einem Phasenausgang (PVa, PVb, PVc) zugeordnete Schalteranordnungen ($2_a$, $2_b$, $2_c$), wobei in mindestens einer der Schalteranordnungen ($2_a$, $2_b$, $2_c$) Strompfade von den Spannungseingängen ($E_1$, $E_0$, $E_2$) zu einem der jeweiligen Schalteranordnung ($2_a$, $2_b$, $2_c$) zugeordneten Phasenausgang (PVa, PVb, PVc) schaltbar sind, um dort mehr als zwei Ausgangsspannungsniveaus bereitzustellen,

wobei mindestens ein Teil der Strompfade über eine fliegende Kapazität (5) in der Schalteranordnung ($2_a$, $2_b$, $2_c$) verläuft;
wobei der Wechselrichter (1) betrieben wird, indem die Strompfade in der mindestens einen Schalteranordnung

($2_a$, $2_b$, $2_c$) gemäß Schaltzuständen ausgewählt werden:

- um über eine Zeitperiode einer Modulation mehrere Schaltzustände zu kombinieren, so dass eine Phasenspannung an einem Phasenausgang (PVa, PVb, PVc) durch zeitliche Kombination von mehreren verschiedenen Ausgangsspannungsniveaus während einer oder mehreren der Zeitperioden bereitgestellt wird, und
- um eine durchschnittliche Kondensatorspannung über der fliegenden Kapazität (5) gemäß einer Vorgabe einzustellen;

**dadurch gekennzeichnet, dass**
das Auswählen der Strompfade in der mindestens einen Schalteranordnungen ($2_a$, $2_b$, $2_c$) durchgeführt wird, so dass die entsprechende Phasenspannung durch Kombination von mindestens zwei Schaltzuständen mit unterschiedlichen, nicht zueinander benachbarten Ausgangsspannungsniveaus während der einen oder den mehreren Zeitperioden generiert werden, um einen gewünschten durchschnittlichen Strom aus mindestens einem der Spannungseingänge ($E_1$, $E_0$, $E_2$) einzustellen, und
dass die Phasenspannungen erzeugt werden, so dass sie zu einer Variation mindestens einer der Gegentaktspannungen um maximal ein Ausgangsspannungsniveau führen.

**15.** Verfahren nach Anspruch 13 oder 14, wobei die Zeitperiode einer Modulationsperiode eines Modulationsverfahrens, insbesondere einer Pulsweitenmodulation oder einer Raumvektormodulation, entspricht.

**16.** Verfahren nach Anspruch 13 oder 14, wobei die Zeitperiode einer variablen Zeitdauer eines Modulationsverfahrens entspricht, das keine konstante Modulationsperiode verwendet.

**17.** Verfahren nach einem der Ansprüche 13 bis 16, wobei die Zeitperiode gleich oder kürzer ist als ein Sechstel einer Grundperiode einer der auszugebenden Phasenspannungen.

**18.** Verfahren nach Anspruch 14,
**dadurch gekennzeichnet, dass** während mehrerer Zeitperioden die durchschnittlichen Gegentaktspannungen konstant gehalten werden.

**19.** Verfahren nach einem der Ansprüche 13 bis 18,
**dadurch gekennzeichnet, dass** für jede Schalteranordnung ($2_a$, $2_b$, $2_c$) die Schaltzustände einer Zeitperiode so ausgewählt werden, dass sie entweder zu einander entgegen gesetzten Stromrichtungen in der fliegenden Kapazität (5) oder zu keinem Stromfluss in der fliegenden Kapazität (5) führen.

**20.** Verfahren nach einem der Ansprüche 13 bis 19,
**dadurch gekennzeichnet, dass** für jede der Schalteranordnungen ($2_a$, $2_b$, $2_c$) die Schaltzustände während der Zeitperiode kombiniert werden, so dass für mindestens einen der Spannungseingänge ($E_1$, $E_0$, $E_2$) ein durchschnittlicher Strom oder ein bestimmtes Stromprofil eingestellt wird.

**21.** Verfahren nach Anspruch 20,
**dadurch gekennzeichnet, dass** für jede der Schalteranordnungen ($2_a$, $2_b$, $2_c$) die Schaltzustände während der Zeitperiode kombiniert werden, so dass für einen der Spannungseingänge ($E_1$, $E_0$, $E_2$), der ein mittleres Eingangsspannungspotential bereitstellt, ein durchschnittlicher Strom von Null eingestellt wird.

**22.** Verfahren nach einem der Ansprüche 13 bis 21,
**dadurch gekennzeichnet, dass** als die Schaltzustände bei der auszugebenden Phasenspannung während der Zeitperiode oder während einer bestimmten Anzahl von Zeitperioden Schaltzustände abhängig von einem einzustellenden durchschnittlichen Strom ausgewählt werden, die zu einer Strombilanz des mindestens einen Spannungseingangs ($E_1$, $E_0$, $E_2$) während der oder der mehreren Zeitperioden mit einem durchschnittlichen Strom als dem einzustellenden durchschnittlichen Strom führen.

**23.** Verfahren nach Anspruch 22,
**dadurch gekennzeichnet, dass** beim Auswählen der Schaltzustände das Einstellen der durchschnittlichen Kondensatorspannung über der fliegenden Kapazität (5) gegenüber dem Einstellen des durchschnittlichen Stroms des mindestens einen Spannungseingangs ($E_1$, $E_0$, $E_2$) priorisiert wird.

Fig. 1

Fig. 2

Fig. 3

Fig. 4

Fig. 5

Fig. 6

Fig. 7

$\oplus$ Reguläre Vektoren

⊕ Reguläre Vektoren

Ⓘ Virtuelle Vektoren erster Typ

⊙ Modifizierte Vektoren

⊗ Virtuelle Vektoren zweiter Typ

Fig. 8

25

Fig. 9

⊕ Reguläre Vektoren

⊙ Modifizierte Vektoren

⊖ Virtuelle Vektoren erster Typ

⊗ Virtuelle Vektoren zweiter Typ

Fig. 10

⊕ Vektoren

⊙ Modifizierte
Vektoren

EP 2 110 939 A1

27

Europäisches Patentamt
European Patent Office
Office européen des brevets

**EUROPÄISCHER RECHERCHENBERICHT**

Nummer der Anmeldung

EP 08 15 4781

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | HAEDERLI C ET AL: "Neutral point control in multi level converters applying novel modulation schemes" POWER ELECTRONICS SPECIALISTS CONFERENCE, 2006. PESC '06. 37TH IEEE JEJU, KOREA 18-22 JUNE 2006, PISCATAWAY, NJ, USA,IEEE, 18. Juni 2006 (2006-06-18), Seiten 1-8, XP010945275 ISBN: 978-0-7803-9716-3 * Zusammenfassung * * Abbildungen 3,5,10 * * Absätze [000I], [II.A], [0III], [00IV], [000V] * | 1-5, 9-19, 23-27 | INV. H02M7/487 |
| A | | 6-8, 20-22 | |
| Y | ZHANG L ET AL: "Analysis and control of a multi-level flying capacitor inverter" POWER ELECTRONICS CONGRESS, 2002. TECHNICAL PROCEEDINGS. CIEP 2002. VI II IEEE INTERNATIONAL OCT. 20-24, 2002, PISCATAWAY, NJ, USA,IEEE, 20. Oktober 2002 (2002-10-20), Seiten 66-71, XP010648775 ISBN: 978-0-7803-7640-3 * Zusammenfassung * * Abbildung 3 * * Seite 68, linke Spalte * | 1-5, 9-19, 23-27 | RECHERCHIERTE SACHGEBIETE (IPC) H02M |
| A | | 6-8, 20-22 | |

-/--

Der vorliegende Recherchenbericht wurde für alle Patentansprüche erstellt

| Recherchenort | Abschlußdatum der Recherche | Prüfer |
|---|---|---|
| München | 24. Oktober 2008 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

Europäisches Patentamt

European Patent Office

Office européen des brevets

**EUROPÄISCHER RECHERCHENBERICHT**

**Nummer der Anmeldung**

EP 08 15 4781

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | SHUKLA A ET AL: "Improved Multilevel Hysteresis Current Regulation and Capacitor Voltage Balancing Schemes for Flying Capacitor Multilevel Inverter" IEEE TRANSACTIONS ON POWER ELECTRONICS, IEEE SERVICE CENTER, PISCATAWAY, NJ, US, Bd. 23, Nr. 2, 1. März 2008 (2008-03-01), Seiten 518-529, XP011203751 ISSN: 0885-8993 * Zusammenfassung * * Seite 518, rechte Spalte * ----- | 3,17 | |
| A | BARBOSA ET AL: "Active Neutral-Point-Clamped Multilevel Converters" POWER ELECTRONICS SPECIALISTS, 2005 IEEE 36TH CONFERENCE ON JUNE 12, 2005, PISCATAWAY, NJ, USA,IEEE, 1. Januar 2005 (2005-01-01), Seiten 2296-2301, XP031000453 ISBN: 978-0-7803-9033-1 * Zusammenfassung * * Abbildungen Fig.,3(a) * * Absatz [0III] * ----- | 1-27 | |
| | | | **RECHERCHIERTE SACHGEBIETE (IPC)** |
| A | SERGIO A GONZALEZ ET AL: "Analysis of a Cascade Asymmetric Topology for Multilevel Converters" INDUSTRIAL ELECTRONICS, 2007. ISIE 2007. IEEE INTERNATIONAL SYMPOSIUM ON, IEEE, PI, 1. Juni 2007 (2007-06-01), Seiten 1027-1032, XP031156275 ISBN: 978-1-4244-0754-5 * Zusammenfassung * * Abbildung 2 * * Absatz [0III] * ----- | 1-27 | |

Der vorliegende Recherchenbericht wurde für alle Patentansprüche erstellt

| Recherchenort | Abschlußdatum der Recherche | Prüfer |
|---|---|---|
| München | 24. Oktober 2008 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)